# EUROPEAN PATENT APPLICATION

(11) **EP 2 273 291 A2**
(43) Date of publication of application: **12.01.2011**
(21) Application number: 10185938.7
(22) Date of filing: 16.09.2005
(51) Int. Cl.: G02B 5/30, B32B 7/06, B29C 55/02, C09D 5/20

(54) **Optical bodies and methods for making optical bodies**

(30) Priority: 29.10.2004 US 977211
(62) Divisional of application: 05798179.7
(71) Applicant: 3M Innovative Properties Co., St. Paul, MN 55133-3427 (US)
(72) Inventor: Hebrink, Timothy J., Saint Paul, Minnesota (US); Strobel, Joan M., Saint Paul, Minnesota 55133-3427 (US); Rosell, Barry S., Saint Paul, Minnesota 55133-3427 (US); Purcell, John P., Saint Paul, Minnesota 55133-3427 (US); Hamer, Kevin M., Saint Paul, Minnesota 55133-3427 (US); Derks, Kristopher, Saint Paul, Minnesota 55133-3427 (US); Taylor, Robert D., Saint Paul, Minnesota 55133-3427 (US); Black, William B., Saint Paul, Minnesota 55133-3427 (US); Bluem, Gregory L., Saint Paul, Minnesota 55133-3427 (US)
(74) Representative: Vossius & Partner

(57) **Abstract**

Optical bodies are disclosed that include an optical film and at least one rough strippable skin layer operatively connected to a surface of the optical film.

## Description

The present invention relates to optical bodies and methods of producing optical bodies.

Optical films, including optical brightness enhancement films, are widely used for various purposes. Exemplary applications include compact electronic displays, including liquid crystal displays (LCDs) placed in mobile telephones, personal data assistants, computers, televisions and other devices. Such films include Vikuiti™ Brightness Enhancement Film (BEF), Vikuiti™ Dual Brightness Enhancement Film (DBEF) and Vikuiti™ Diffuse Reflective Polarizer Film (DRPF), all available from 3M Company. Other widely used optical films include reflectors, such as Vikuiti™ Enhanced Specular Reflector (ESR).

Although optical films can have favorable optical and physical properties, one limitation of some optical films is that they can incur damage to their surfaces, such as scratching, denting and particle contamination, during manufacturing, handling and transport. Such defects can render the optical films unusable or can necessitate their use only in combination with additional diffusers in order to hide the defects from the viewer. Eliminating, reducing or hiding defects on optical films and other components is particularly important in displays that are typically viewed at close distance for extended periods of time. It is also useful to hide lighting components positioned behind the optical films, such as fluorescent tubes or LED lights.

The present disclosure is directed to optical bodies. In one implementation, optical bodies include an optical film and at least one rough strippable skin layer operatively connected to an adjacent surface of the optical film. The at least one strippable skin layer includes a first polymer, a second polymer different from the first polymer, and an additional material that is substantially immiscible in at least one of the first and second polymers.

In a second implementation, the present disclosure is directed to optical bodies including an optical film having a major axis and a minor axis and at least one rough strippable skin layer operatively connected to an adjacent surface of the optical film. The at least one rough strippable skin layer includes a continuous phase and a disperse phase. A surface of the at least one rough strippable skin layer adjacent to the optical film comprises a plurality of protrusions and the adjacent surface of the optical film comprises a plurality of asymmetric depressions substantially corresponding to said plurality of protrusions.

In a third implementation, the present disclosure is directed to optical bodies including an optical film having a first surface, a major axis and a minor axis. The first surface includes a plurality of asymmetric depressions, each asymmetric depression having a major dimension substantially collinear with the major axis and a minor direction substantially collinear with the minor axis.

In a fourth implementation, the present disclosure is directed to optical bodies including an optical film and at least one rough strippable skin layer operatively connected to a surface of the optical film. The at least one strippable skin layer includes a continuous phase and a disperse phase, the continuous phase including at least one of: a polypropylene, a polyester, a linear low density polyethylene, a nylon and copolymers thereof.

The present disclosure is also directed to methods of making optical bodies. In one implementation, methods of making optical bodies include the steps of disposing at least one rough strippable skin layer on an adjacent surface of an optical film, such that the at least one rough strippable skin layer is operatively connected to the adjacent surface of the optical film. The at least one strippable skin layer includes a first polymer, a second polymer different from the first polymer, and an additional material that is substantially immiscible in at least one of the first and second polymers.

In another implementation, the present disclosure is directed to methods of making optical bodies including the steps of disposing at least one rough strippable skin layer on an adjacent surface of an optical film, such that the at least one rough strippable skin layer is operatively connected to the adjacent surface of the optical film. The at least one strippable skin layer includes a continuous phase and a disperse phase. The methods also includes subjecting the optical film together with the at least one rough strippable skin layer to uniaxial or unbalanced biaxial orientation.

In yet another implementation, the present disclosure is directed methods of making optical bodies, including the step of disposing at least one rough strippable skin layer on an adjacent surface of an optical film, such that the at least one rough strippable skin layer is operatively connected to the adjacent surface of the optical film. The at least one strippable skin layer includes a continuous phase and a disperse phase, the continuous phase including at least one of: a polypropylene, a polyester, a linear low density polyethylene, a nylon and copolymers thereof.

So that those of ordinary skill in the art to which the subject invention pertains will more readily understand how to make and use the subject invention, exemplary embodiments thereof are described in detail below with reference to the drawings, wherein:
Figure 1 is a schematic partial cross-sectional view of an optical body constructed in accordance with an exemplary embodiment of the present disclosure, showing an optical fihn and two rough strippable skin layers disposed on two opposite surfaces of the optical film;
Figure 2 is a schematic partial cross-sectional view of an optical body constructed in accordance with another exemplary embodiment of the present disclosure, showing an optical film and one rough strippable skin layer disposed on a surface of the optical film;
Figure 3 is a schematic partial cross-sectional view of an optical body constructed in accordance with yet another embodiment of the present disclosure, showing an optical film, one strippable skin layer disposed on a surface of the optical film and a smooth outer skin layer;
Figure 4A is a schematic partial perspective view of an optical film constructed in accordance with an exemplary embodiment of the present disclosure, showing asymmetrical surface structures on a surface of an optical film;
Figure 4B is a schematic partial perspective view of an optical film constructed in accordance with another embodiment of the present disclosure, also showing asymmetrical surface structures on a surface of an optical film;
Figure 4C is a schematic partial cross-sectional view of an optical film constructed in accordance with the embodiment of Fig. 4B sectioned along a minor axis of the optical film;
Figure 5A shows a scanning electron microscopy (SEM) photomicrograph of a styrene acrylonitrile (SAN) film after the removal of rough strippable skin layers containing about 0% of TONE™ P-787 polycaprolactone (P-787);
Figure 5B shows an SEM photomicrograph of a rough strippable skin layer containing about 0% of P-787;
Figure 5C shows an SEM photomicrograph of a SAN film after the removal of rough strippable skin layers containing about 1% of P-787;
Figure 5D shows an SEM photomicrograph of a rough strippable skin layer containing about 1% of P-787;
Figure 5G shows an SEM photomicrograph of a SAN film after the removal of rough strippable skin layers containing about 3% of TONE™ P-787 polycaprolactone;
Figure 5H shows an SEM photomicrograph of a rough strippable skin layer containing about 3% of P-787;
Figure 6A shows an SEM photomicrograph of the air side optical film surface after the removal of rough strippable skin layers containing about 0.5% of P-787;
Figure 6B shows an SEM photomicrograph of the air side of the rough strippable skin layer containing about 0.5 % of P-787 used to impart the texture shown in Fig. 6A;
Figure 6C shows an enlarged SEM photomicrograph of the air side optical film surface shown in Fig. 6A.
Figure 6D shows an SEM photomicrograph of the wheel side optical film surface after the removal of rough strippable skin layers containing about 0.5% of P-787;
Figure 6E shows an SEM photomicrograph of the wheel side rough strippable skin layer containing about 0.5% of P-787 used to impart the texture of Fig. 6D.
Figure 6F shows an enlarged SEM photomicrograph of the wheel side optical film surface shown in Fig. 6D;
Figure 7 shows a surface roughness analysis using optical interferometry of an example optical film;
Figure 8 shows a surface roughness analysis using optical interferometry of an example optical film shown in Fig. 7;
Figure 9 shows a surface roughness analysis using optical interferometry of an example optical film;
Figure 10 shows a surface roughness analysis using optical interferometry of an example optical film shown in Fig. 9;
Figure 11 shows a surface roughness analysis using optical interferometry of an example optical film;
Figure 12 shows a surface roughness analysis using optical interferometry of an example optical film;
Figure 13 shows a surface roughness analysis using optical interferometry of an example optical film;
Figure 14 shows a surface roughness analysis using optical interferometry of an example optical film;
Figure 15 shows a table summarizing various properties of some exemplary embodiments of the present disclosure; and

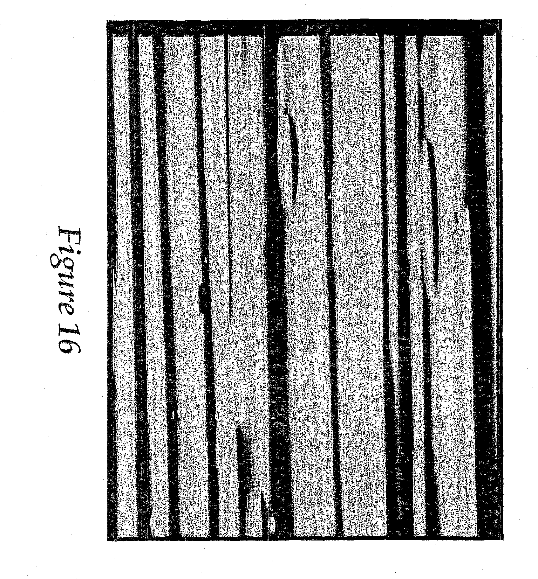

Figure 16 is an SEM photomicrograph of an optical film having a rough surface according to another exemplary embodiment of the present disclosure.

As summarized above, the present disclosure provides an optical body that includes one or more rough strippable skin layers that are operatively connected to an optical film. Such rough strippable skin layers can be used to impart a surface texture onto an optical film, for example, by co-extruding or orienting the optical film with the rough strippable skin layers or by other methods described herein. The surface texture can include surface structures, and, in some exemplary embodiments, asymmetric surface structures. In some applications, such asymmetric surface structures can provide improved optical performance of the optical body.

In general, the strippable skin layers of the present disclosure are operatively connected to the optical films, so that they are capable of remaining adhered to the optical film during initial processing, storage, handling, packaging, transporting and subsequent processing, but can then be stripped or removed by a user. For example, the strippable skin layers can be removed immediately prior to installation into an LCD without applying excessive force, damaging the optical film or contaminating it with a substantial residue of skin particles.

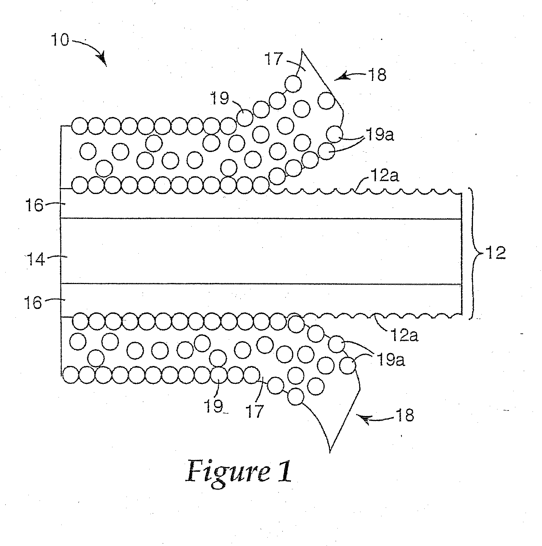

Reference is now made to the drawings, which show further aspects of the invention. Figs. 1, 2 and 3 show example embodiments of the present disclosure in simplified schematic form. In Fig. 1, an optical body 10 constructed according to an exemplary embodiment of the present disclosure is depicted in simplified schematic form, and includes an optical film 12 and at least one rough strippable skin layer 18 disposed on one or two opposing surfaces of the optical film 12. The rough strippable skin layer or layers 18 are typically deposited onto the optical film 12 by co-extrusion or by other suitable methods, such as coating, casting or lamination. Some suitable methods of making exemplary optical bodies according to the present invention require or at least benefit from pre-heating of the film. In some exemplary embodiments, the strippable skin layers can be formed directly on the optical film.

During deposition of the strippable skin layers onto the optical film, after such deposition, or during subsequent processing, the rough strippable skin layers 18 can impart a surface texture including depressions 12a on the optical film 12. Thus, in typical embodiments of the present disclosure, at least a portion of the disperse phase 19 will form protrusions 19a projecting from the surface of the rough strippable skin layers 18, capable of patterning the optical film 12 with the surface structure having depressions 12a corresponding to protrusions 19a when the optical body 10 is extruded, oriented or otherwise processed. The optical film 12 can include a film body 14 and one or more optional under-skin layers 16.

In the depicted embodiment, the rough strippable skin layers 18 include a continuous phase 17 and a disperse phase 19. The disperse phase 19 can be formed by blending particles in the continuous phase 17 or by mixing in a material or materials that are immiscible in the continuous phase 17 at the appropriate stages of processing, which preferably then phase-separate and form a rough surface at the interface between the strippable skin material and the optical film. The continuous phase 17 and disperse phase 19 are shown in a generalized and simplified view in Fig. 1, and in practice the two phases can be less uniform and more irregular in appearance. The degree of phase separation of the immiscible polymers depends upon the driving force for separation, such as extent of compatibility, extrusion processing temperature, degree of mixing, quenching conditions during casting and film formation, orientation temperatures and forces, and subsequent thermal history. In some exemplary embodiments, the rough strippable skin layer 18 may contain multiple sub-phases of the disperse or/and the continuous phase.

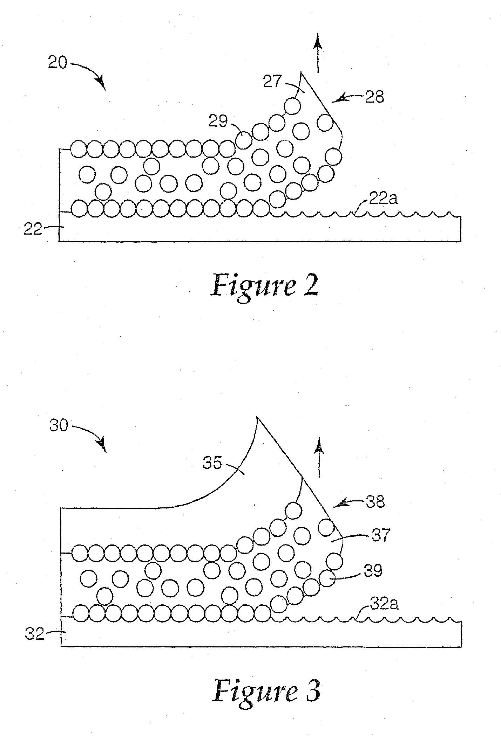

In Fig. 2, an optical body 20 constructed according to another exemplary embodiment of the present disclosure includes an optical film 22 and one rough strippable skin layer 28 disposed on a surface of the optical film 22. During the deposition of the rough skin layers onto the optical film, after such deposition or during subsequent processing of the optical body, such as lamination, co-extrusion or orientation, the rough strippable skin layer 28 imparts a surface texture including depressions 22a on the optical film 22. The rough strippable skin layer 28 includes a continuous phase 27 and a disperse phase 29. In Fig. 3, an optical body 30 constructed according to yet another exemplary embodiment of the present disclosure includes an optical film 32 and one rough strippable skin layer 38 disposed on a surface of the optical film 32. During the deposition of the rough skin layer onto the optical film, after such deposition or during subsequent processing, such as co-extrusion, orientation or lamination, the rough strippable skin layer 38 imparts a surface texture including depressions 32a on the optical film 32. In this exemplary embodiment, the rough strippable skin layer 38 includes a continuous phase 37, a disperse phase 39 and a smooth outer skin layer 35, which can be formed integrally and removed with the rest of the rough strippable skin layer 38. Alternatively, the smooth outer skin layer 3 5 can be formed and/or removed separately from the rough strippable skin layer 38. In some exemplary embodiments, the smooth outer skin layer 35 can include at least one of the same materials as the continuous phase 37. The smooth outer skin layer may be beneficial in reducing the extruder die lip buildup and flow patterns that can be caused by the material of the disperse phase 39. The layers depicted in Figs. 1, 2 and 3 can be constructed to have different relative thicknesses than those illustrated.

Additional aspects of the invention will now be explained in greater detail.

### Strippable Skin Layers

The optical bodies of the present invention are formed with a strippable skin layer or layers, typically a rough strippable skin layer or layers. According to the present disclosure, the interfacial adhesion between the rough strippable skin layer(s) and the optical film can be controlled so that the rough strippable skin layers are capable of being operatively connected to the optical film, i.e., can remain adhered to the optical film for as long as desired for a particular application, but can also be cleanly stripped or removed from the optical film before use without applying excessive force, damaging the optical film or significantly contaminating the optical film with the residue from the skin layers.

In addition, it is sometimes beneficial if the rough strippable skin layers have sufficient adhesion to the optical film that they can be re-applied, for example, after inspection of the optical film. In some exemplary embodiments of the present disclosure, the optical bodies with the rough strippable skins operatively connected to the optical film are substantially transparent or clear, so that they can be inspected for defects using standard inspection equipment. Such exemplary clear optical bodies usually have rough strippable skins in which disperse and continuous phases have approximately the same or sufficiently similar refractive indexes. In some exemplary embodiments of such clear optical bodies, the refractive indexes of the materials making up the disperse and continuous phases differ from each other by no more than about 0.02.

It has been found that the operative connection of the at least one rough strippable skin layer to an adjacent surface of an optical film, included in the optical bodies of the present disclosure, is likely to have advantageous performance characteristics if the materials of the rough strippable skin layers can be selected so that the adhesion of the skin(s) to the optical films is characterized by a peel force of at least about 2 g/in or more. Other exemplary optical bodies constructed according to the present disclosure can be characterized by a peel force of about 4, 5, 10 or 15 g/in or more. In some exemplary embodiments, the optical bodies can be characterized by a peel force as high as about 100 g/in or even about 120 g/in. In other exemplary embodiments, the optical bodies can be characterized by a peel force of about 50, 35, 30 or 25 g/in or less. In some exemplary implementations the adhesion can be in the range from 2 g/in to 120 g/in, from 4 g/in to 50 g/in, from 5 g/in to 35 g/in, or from 15 g/in to 25 g/in. In other exemplary embodiments, the adhesion can be within other suitable ranges. Peel forces over 120 g/in can be tolerated for some applications.

The peel force that can be used to characterize exemplary embodiments of the present disclosure can be measured as follows. In particular, the present test method provides a procedure for measuring the peel force needed to remove a strippable skin layer from an optical film (e.g., multilayer film, polycarbonate, etc.). Test-strips are cut from the optical body with a rough strippable skin layer adhered to the optical film. The strips are typically about 1" width, and more than about 6" in length. The strips may be preconditioned for environmental aging characteristics (e.g., hot, hot & humid, cold, thermalshock). Typically, the samples should dwell for more than about 24 hours prior to testing. The 1" strips are then applied to rigid plates, for example, using double-sided tape (such as Scotch™ double sided tape available from 3M), and the plate/test-strip assembly is fixed in place on the peel-tester platen. The leading edge of the rough strippable skin is then separated from the optical film and clamped to a fixture connected to the peel-tester loadcell. The platen holding the plate/test-strip assembly is then carried away from the loadcell at constant speed of about 90 inches/minute, effectively peeling the strippable skin layer from the substrate optical film at about an 180 degree angle. As the platen moves away from the clamp, the force required to peel the strippable skin layer off the film is sensed by the load cell and recorded by a microprocessor. The force required for peel is then averaged over 5 seconds of steady-state travel (preferably ignoring the initial shock of starting the peel) and recorded.

It has been found that these and related goals can be accomplished by careful selection of the materials for making the continuous phase and the disperse phase and ensuring their compatibility with at least some of the materials used to make the optical film, especially the materials of the outer surfaces of the optical film or, in the appropriate embodiments, of the under-skin layers. In accordance with one implementation of the present disclosure, the continuous phase of the rough strippable skin layers should have low crystallinity or be sufficiently amorphous in order to remain adhered to the optical film for a desired period of time.

Thus, in the appropriate embodiments of the present disclosure, the degree of adhesion of the rough strippable skin layers to an adjacent surface or surfaces of the optical film, as well as the degree of surface roughness, can be adjusted to fall within a desired range by blending in more crystalline or less crystalline materials, more adhesive or less adhesive materials, or by promoting the formation of crystals in one or more of the materials through subsequent processing steps. In some exemplary embodiments, two or more different materials with different adhesions can be used as co-continuous phases included into the continuous phase of the rough strippable skin layers of the present disclosure. For example, a material with relatively high crystallinity, such as high density polyethylene (HDPE) or polycaprolactone, can be blended into the rough strippable skin layers in order to impart rough texture into the surface of an optical film that is adjacent to the rough strippable skin layer and to affect adhesion. Nucleating agents can also be blended into the rough strippable skin layers in order to adjust the rate of crystallization of one or more of the phases in the strippable skin composition. In some exemplary embodiments, pigments, dyes or other coloring agents can be added to the materials of the rough strippable skins for improved visibility of the skin layers.

The degree of surface roughness of the rough strippable skin layers can be adjusted similarly by mixing or blending different materials, for example, polymeric materials, inorganic materials, or both into the disperse phase. In addition, the ratio of disperse phase to continuous phase can be adjusted to control the degree of surface roughness and adhesion and will depend on the particular materials used. Thus, one, two or more polymers would function as the continuous phase, while one, two or more materials, which may or may not be polymeric, would provide a disperse phase with a suitable surface roughness for imparting a surface texture. The one or more polymers of the continuous phase can be selected to provide a desired adhesion to the material of the optical film. For example, HDPE could be blended into low crystallinity syndiotactic polypropylene (sPP) for improving surface roughness along with a low crystallinity poly(ethylene octene) (PE-PO) for improving strippable skin adhesion.

Where the disperse phase is capable of crystallization, the roughness of the strippable skin layer or layers can be enhanced by crystallization of this phase at an appropriate extrusion processing temperature, degree of mixing, and quenching, as well as through addition of nucleation agents, such as aromatic carboxylic-acid salts (sodium benzoate); dibenzylidene sorbitol (DBS), such as Millad 3988 from Milliken & Company; and sorbitol acetals, such as Irgaclear clarifiers by Ciba Specialty Chemicals and NC-4 clarifier by Mitsui Toatsu Chemicals. Other nucleators include organophosphate salts and other inorganic materials, such as ADKstab NA-11 and NA-21 phosphate esters from Asahi-Denka and Hyperform HPN-68, a norbomene carboxylic-acid salt from Milliken & Company. In some exemplary embodiments, the disperse phase includes particles, such as those including inorganic materials, that will protrude from the surface of the rough strippable skin layers and impart surface structures into the optical film when the optical body is processed, e.g., extruded, oriented or laminated together.

### Disperse Phase of Strippable Layer

The disperse phase of the rough strippable skin layers can include particles or other rough features that are sufficiently large (for example, at least 0.1 micrometers average diameter) to be used to impart a surface texture into the outer surface of an adjacent layer of the optical film by application of pressure and/or temperature to the optical film with the rough strippable skin layer or layers. At least a substantial portion of protrusions of the disperse phase should typically be larger than the wavelength of the light it is illuminated with but still small enough not to be resolved with an unaided eye. Such particles can include particles of inorganic materials, such as silica particles, talc particles, sodium benzoate, calcium carbonate, a combination thereof or any other suitable particles. Alternatively, the disperse phase can be formed from polymeric materials that are (or become) substantially immiscible in the continuous phase under the appropriate conditions.

The disperse phase can be formed from one or more materials, such as inorganic materials, polymers, or both that are different from at least one polymer of the continuous phase and immiscible therein, with the disperse polymer phases having typically a higher degree of crystallinity than the polymer or polymers of the continuous phase. In some exemplary embodiments, the use of more than one material for the disperse phase can result in rough features or protrusions of different sizes or compounded protrusions, such as "protrusion-on-protrusion" configurations. Such constructions can be beneficial for creating hazier surfaces on optical films. It is preferred that the disperse phase is only mechanically miscible or immiscible with the continuous phase polymer or polymers. The disperse phase material or materials and the continuous phase material or materials can phase separate under appropriate processing conditions and form distinct phase inclusions within the continuous matrix, and particularly at the interface between the optical film and the rough strippable skin layer.

Exemplary polymers that are particularly suitable for use in the disperse phase include styrene acrylonitrile, modified polyethylene, polycarbonate and copolyester blend, C-caprolactone polymer, such as TONE™ P-787, available from Dow Chemical Company, random copolymer of propylene and ethylene, other polypropylene copolymers, poly(ethylene octene) copolymer, anti-static polymer, high density polyethylene, medium density polyethylene, linear low density polyethylene and polymethyl methacrylate. The disperse phase of the rough strippable skin layers may include any other appropriate material, such as any suitable crystallizing polymer and it may include the same materials as one or more of the materials used in the optical film.

### Continuous Phase of Strippable Layer

Materials suitable for use in the continuous phase of the strippable layer include, for example, polyolefins, such as low melting and low crystallinity polypropylenes and their copolymers; low melting and low crystallinity polyethylenes and their copolymers, low melting and low crystallinity polyesters and their copolymers, or any suitable combination thereof. Such low melting and low crystalinity polypropylenes and their copolymers consist of propylene homopolymers and copolymers of propylene and ethylene or alpha-olefin materials having between 4 to 10 carbon atoms. The term "copolymer" includes not only the copolymer, but also terpolymers and polymers of four or more component polymers. Suitable low melting and low crystallinity polypropylenes and their copolymers include, for example, syndiotactic polypropylene (such as, Finaplas 1571 from Total Petrochemicals, Inc.), which is a random copolymer with an extremely low ethylene content in the syndiotactic polypropylene backbone, and random copolymers of propylene (such as PP8650 or PP6671 from Atofina, which is now Total Petrochemicals, Inc.). The described copolymers of propylene and ethylene can also be extrusion blended with homopolymers of polypropylene to provide a higher melting point skin layer if needed.

Other suitable low melting and low crystallinity polyethylenes and polyethylene copolymers include, for example, linear low density polyethylene and ethylene vinyl alcohol copolymers. Suitable polypropylenes include, for example, random copolymers of propylene and ethylene (for example, PP8650 from Total Petrochemicals, Inc.), or ethylene octene copolymers (for example, Affinity PT 1451 from Dow Chemical Company). In some embodiments of the present disclosure, the continuous phase includes an amorphous polyolefin, such as an amorphous polypropylene, amorphous polyethylene, an amorphous polyester, or any suitable combination thereof or with other materials. In some embodiments, the materials of the rough strippable skin layers can include nucleating agents, such as sodium benzoate to control the rate of crystallization. Additionally, anti-static materials, anti-block materials, coloring agents such as pigments and dyes, stabilizers, and other processing aids may be added to the continuous phase. Additionally or alternatively, the continuous phase of the rough strippable skin layers may include any other appropriate material. In some exemplary embodiments, migratory antistatic agents can be used in the rough strippable skin layers to lower their adhesion to the optical films.

### Optical Films

Various optical films are suitable for use in the embodiments of the present disclosure. Such optical films are likely to benefit from protective strippable skin layers, which could prevent or reduce surface defects and provide other advantageous characteristics. For example, optical brightness enhancement films as well as reflective optical films are suitable for use with the appropriate embodiments of the present disclosure. In some applications these optical films are likely to benefit from roughening one or more of their surfaces, for example, to mask defects and/or light sources, to provide a hazy surface to facilitate diffusion of light, or to prevent the optical film from adhering and/or optical coupling to adjacent components.

The optical films 12, 22 and 32, respectively of Figs. 1, 2, and 3, can include dielectric multilayer optical films (whether composed of all birefringent optical layers, some birefringent optical layers, or all isotropic optical layers), such as DBEF and ESR, and continuous/disperse phase optical films, such as DRPF, which can be characterized as polarizers or mirrors. The optical films 22 and 32 of the exemplary embodiments shown in Figs. 2 and 3 can include a prismatic film, such as BEF, or another optical film having a structured surface and disposed so that the structured surface faces away from the rough strippable skin layer 28 or 38.

In addition, the optical film can be or can include a diffuse micro-voided reflective film, such as BaSO4-filled PET, or diffuse "white" reflective film such as TiO₂-filled PET. Alternatively, the optical film can be a single layer of a suitable optically clear material such as polycarbonate, which may or may not include volume diffusers. Those of ordinary skill in the art will readily appreciate that the structures, methods, and techniques described herein can be adapted and applied to other types of suitable optical films. The optical films specifically mentioned herein are merely illustrative examples and are not meant to be an exhaustive list of optical films suitable for use with exemplary embodiments of the present disclosure.

Exemplary optical films that are suitable for use in the present invention include multilayer reflective films such as those described in, for example, U.S. Patents Nos. 5,882,774 and 6,352,761 and in PCT Publication Nos. WO95/17303; WO95/17691; WO95/17692; WO95/17699; WO96/19347; and WO99/36262, all of which are incorporated herein by reference. Both multilayer reflective optical films and continuous/disperse phase reflective optical films rely on index of refraction differences between at least two different materials (typically polymers) to selectively reflect light of at least one polarization orientation. Suitable diffuse reflective polarizers include the continuous/disperse phase optical films described in, for example, U.S. Patent No. 5,825,543, incorporated herein by reference, as well as the diffusely reflecting optical films described in, for example, U.S. Patent No. 5,867,316, incorporated herein by reference.

In some embodiments the optical film is a multilayer stack of polymer layers with a Brewster angle (the angle at which reflectance of p- polarized light turns to zero) that is very large or nonexistent. Multilayer optical films can be made into a multilayer mirror or polarizer whose reflectivity for p- polarized light decreases slowly with angle of incidence, is independent of angle of incidence, or increases with angle of incidence away from the normal. Multilayer reflective optical films are used herein as an example to illustrate optical film structures and methods of making and using the optical films of the invention. As mentioned above, the structures, methods, and techniques described herein can be adapted and applied to other types of suitable optical films.

For example, a suitable multilayer optical film can be made by alternating (e.g., interleaving) uniaxially- or biaxially-oriented birefringent first optical layers with second optical layers. In some embodiments, the second optical layers have an isotropic index of refraction that is approximately equal to one of the in-plane indices of the oriented layer. The interface between the two different optical layers forms a light reflection plane. Light polarized in a plane parallel to the direction in which the indices of refraction of the two layers are approximately equal will be substantially transmitted. Light polarized in a plane parallel to the direction in which the two layers have different indices will be at least partially reflected. The reflectivity can be increased by increasing the number of layers or by increasing the difference in the indices of refraction between the first and second layers.

A film having multiple layers can include layers with different optical thicknesses to increase the reflectivity of the film over a range of wavelengths. For example, a film can include pairs of layers that are individually tuned (for normally incident light, for example) to achieve optimal reflection of light having particular wavelengths. Generally, multilayer optical films suitable for use with certain embodiments of the invention have about 2 to 5000 optical layers, typically about 25 to 2000 optical layers, and often about 50 to 1500 optical layers or about 75 to 1000 optical layers. It should further be appreciated that, although only a single multilayer stack may be described, the multilayer optical film can be made from multiple stacks or different types of optical film that are subsequently combined to form the film. The described multilayer optical films can be made according to U.S. Serial No. 09/229,724 and U.S. Patent Application Publication No. 2001/0013668, which are both incorporated herein by reference.

A polarizer can be made by combining a uniaxially oriented first optical layer with a second optical layer having an isotropic index of refraction that is approximately equal to one of the in-plane indices of the oriented layer. Alternatively, both optical layers are formed from birefringent polymers and are oriented in a draw process so that the indices of refraction in a single in-plane direction are approximately equal. The interface between the two optical layers forms a light reflection plane for one polarization of light. Light polarized in a plane parallel to the direction in which the indices of refraction of the two layers are approximately equal will be substantially transmitted. Light polarized in a plane parallel to the direction in which the two layers have different indices will be at least partially reflected. For polarizers having second optical layers with isotropic indices of refraction or low in-plane birefringence (e.g., no more than about 0.07), the in-plane indices (nₓ and n_{y}) of refraction of the second optical layers are approximately equal to one in-plane index (e.g., n_{y}) of the first optical layers. Thus, the in-plane birefringence of the first optical layers is an indicator of the reflectivity of the multilayer optical film. Typically, it is found that the higher the in-plane birefringence, the better the reflectivity of the multilayer optical film. If the out-of-plane indices (n_{z}) of refraction of the first and second optical layers are equal or nearly equal (e.g., no more than 0.1 difference and preferably no more than 0.05 difference), the multilayer optical film also has better off-angle reflectivity.

A mirror can be made using at least one uniaxially birefringent material, in which two indices (typically along the x and y axes, or nₓ and n_{y}) are approximately equal, and different from the third index (typically along the z axis, or n_{z}). The x and y axes are defined as the in-plane axes, in that they represent the plane of a given layer within the multilayer film, and the respective indices nₓ and n_{y} are referred to as the in-plane indices. One method of creating a uniaxially birefringent system is to biaxially orient (stretch along two axes) the multilayer polymeric film. If the adjoining layers have different stressinduced birefringence, biaxial orientation of the multilayer film results in differences between refractive indices of adjoining layers for planes parallel to both axes, resulting in the reflection of light of both planes of polarization.

A uniaxially birefringent material can have either positive or negative uniaxial birefringence. Negative uniaxial birefringence occurs when the index of refraction in the z direction (n_{z}) is greater than the in-plane indices (nₓ and n_{y}). Positive uniaxial birefringence occurs when the index of refraction in the z direction (n_{z}) is less than the in-plane indices (nₓ and ny). If n_{1z} is selected to match n₂ₓ = n_{2y} = n_{2z} and the first layers of the multilayer film is biaxially oriented, there is no Brewster's angle for p-polarized light and thus there is constant reflectivity for all angles of incidence. Multilayer films that are oriented in two mutually perpendicular in-plane axes are capable of reflecting an extraordinarily high percentage of incident light depending of the number of layers, f-ratio, indices of refraction, etc., and are highly efficient mirrors.

The first optical layers are preferably birefringent polymer layers that are uniaxially- or biaxially-oriented. The birefringent polymers of the first optical layers are typically selected to be capable of developing a large birefringence when stretched. Depending on the application, the birefringence may be developed between two orthogonal directions in the plane of the film, between one or more in-plane directions and the direction perpendicular to the film plane, or a combination of these. The first polymer should maintain birefringence after stretching, so that the desired optical properties are imparted to the finished film. The second optical layers can be polymer layers that are birefringent and uniaxially- or biaxially-oriented, or the second optical layers can have an isotropic index of refraction that is different from at least one of the indices of refraction of the first optical layers after orientation. The second polymer advantageously develops little or no birefringence when stretched, or develops birefringence of the opposite sense (positive - negative or negative - positive), such that its film-plane refractive indices differ as much as possible from those of the first polymer in the finished film. For most applications, it is advantageous for neither the first polymer nor the second polymer to have any absorbance bands within the bandwidth of interest for the film in question. Thus, all incident light within the bandwidth is either reflected or transmitted. However, for some applications, it may be useful for one or both of the first and second polymers to absorb specific wavelengths, either totally or in part.

Materials suitable for making optical films for use in exemplary embodiments of the present disclosure include polymers such as, for example, polyesters, copolyesters and modified copolyesters. In this context, the term "polymer" will be understood to include homopolymers and copolymers, as well as polymers or copolymers that may be formed in a miscible blend, for example, by co-extrusion or by reaction, including, for example, transesterification. The terms "polymer" and "copolymer" include both random and block copolymers. Polyesters suitable for use in some exemplary optical films of the optical bodies constructed according to the present disclosure generally include carboxylate and glycol subunits and can be generated by reactions of carboxylate monomer molecules with glycol monomer molecules. Each carboxylate monomer molecule has two or more carboxylic acid or ester functional groups and each glycol monomer molecule has two or more hydroxy functional groups. The carboxylate monomer molecules may all be the same or there may be two or more different types of molecules. The same applies to the glycol monomer molecules. Also included within the term "polyester" are polycarbonates derived from the reaction of glycol monomer molecules with esters of carbonic acid.

Suitable carboxylate monomer molecules for use in forming the carboxylate subunits of the polyester layers include, for example, 2,6-naphthalene dicarboxylic acid and isomers thereof; terephthalic acid; isophthalic acid; phthalic acid; azelaic acid; adipic acid; sebacic acid; norbornene dicarboxylic acid; bi-cyclooctane dicarboxylic acid; 1,6-cyclohexane dicarboxylic acid and isomers thereof; t-butyl isophthalic acid, trimellitic acid, sodium sulfonated isophthalic acid; 2,2'-biphenyl dicarboxylic acid and isomers thereof; and lower alkyl esters of these acids, such as methyl or ethyl esters. The term "lower alkyl" refers, in this context, to C1-C10 straight-chained or branched alkyl groups.

Suitable glycol monomer molecules for use in forming glycol subunits of the polyester layers include ethylene glycol; propylene glycol; 1,4-butanediol and isomers thereof; 1,6-hexanediol; neopentyl glycol; polyethylene glycol; diethylene glycol; tricyclodecanediol; 1,4-cyclohexanedimethanol and isomers thereof; norbornanediol; bicyclo-octanediol; trimethylol propane; pentaerythritol; 1,4-benzenedimethanol and isomers thereof; bisphenol A; 1,8-dihydroxy biphenyl and isomers thereof; and 1,3-bis (2-hydroxyethoxy)benzene.

An exemplary polymer useful in the optical films of the present disclosure is polyethylene naphthalate (PEN), which can be made, for example, by reaction of naphthalene dicarboxylic acid with ethylene glycol. Polyethylene 2,6-naphthalate (PEN) is frequently chosen as a first polymer. PEN has a large positive stress optical coefficient, retains birefringence effectively after stretching, and has little or no absorbance within the visible range. PEN also has a large index of refraction in the isotropic state. Its refractive index for polarized incident light of 550 nm wavelength increases when the plane of polarization is parallel to the stretch direction from about 1.64 to as high as about 1.9. Increasing molecular orientation increases the birefringence of PEN. The molecular orientation may be increased by stretching the material to greater stretch ratios and holding other stretching conditions fixed. Other semicrystalline polyesters suitable as first polymers include, for example, polybutylene 2,6-naphthalate (PBN), polyethylene terephthalate (PET), and copolymers thereof.

A second polymer of the second optical layers should be chosen so that in the finished film, the refractive index, in at least one direction, differs significantly from the index of refraction of the first polymer in the same direction. Because polymeric materials are typically dispersive, that is, their refractive indices vary with wavelength, these conditions should be considered in terms of a particular spectral bandwidth of interest. It will be understood from the foregoing discussion that the choice of a second polymer is dependent not only on the intended application of the multilayer optical film in question, but also on the choice made for the first polymer, as well as processing conditions.

Other materials suitable for use in optical films and, particularly, as a first polymer of the first optical layers, are described, for example, in U.S. Patents Nos. 6,352,762 and 6,498,683 and U.S. Patent Applications Serial Nos. 09/229724, 09/232332, 09/399531, and 09/444756, which are incorporated herein by reference. Another polyester that is useful as a first polymer is a coPEN having carboxylate subunits derived from 90 mol% dimethyl naphthalene dicarboxylate and 10 mol% dimethyl terephthalate and glycol subunits derived from 100 mol% ethylene glycol subunits and an intrinsic viscosity (IV) of 0.48 dL/g. The index of refraction of that polymer is approximately 1.63. The polymer is herein referred to as low melt PEN (90/10). Another useful first polymer is a PET having an intrinsic viscosity of 0.74 dL/g, available from Eastman Chemical Company (Kingsport, TN). Non-polyester polymers are also useful in creating polarizer films. For example, polyether imides can be used with polyesters, such as PEN and coPEN, to generate a multilayer reflective mirror. Other polyester/non-polyester combinations, such as polyethylene terephthalate and polyethylene (e.g., those available under the trade designation Engage 8200 from Dow Chemical Corp., Midland, MI), can be used.

The second optical layers can be made from a variety of polymers having glass transition temperatures compatible with that of the first polymer and having a refractive index similar to the isotropic refractive index of the first polymer. Examples of other polymers suitable for use in optical films and, particularly, in the second optical layers, other than the CoPEN polymers discussed above, include vinyl polymers and copolymers made from monomers such as vinyl naphthalenes, styrene, maleic anhydride, acrylates, and methacrylates. Examples of such polymers include polyacrylates, polymethacrylates, such as poly (methyl methacrylate) (PMMA), and isotactic or syndiotactic polystyrene. Other polymers include condensation polymers such as polysulfones, polyamides, polyurethanes, polyamic acids, and polyimides. In addition, the second optical layers can be formed from polymers and copolymers such as polyesters and polycarbonates.

Other exemplary suitable polymers, especially for use in the second optical layers, include homopolymers of polymethylmethacrylate (PMMA), such as those available from Ineos Acrylics, Inc., Wilmington, DE, under the trade designations CP71 and CP80, or polyethyl methacrylate (PEMA), which has a lower glass transition temperature than PMMA. Additional second polymers include copolymers of PMMA (coPMMA), such as a coPMMA made from 75 wt% methylmethacrylate (MMA) monomers and 25 wt% ethyl acrylate (EA) monomers, (available from Ineos Acrylics, Inc., under the trade designation Perspex CP63), a coPMMA formed with MMA comonomer units and *n*-butyl methacrylate (nBMA) comonomer units, or a blend of PMMA and poly(vinylidene fluoride) (PVDF) such as that available from Solvay Polymers, Inc., Houston, TX under the trade designation Solef 1008.

Yet other suitable polymers, especially for use in the second optical layers, include polyolefin copolymers such as poly (ethylene-co-octene) (PE-PO) available from Dow-Dupont Elastomers under the trade designation Engage 8200, poly (propylene-coethylene) (PPPE) available from Fina Oil and Chemical Co., Dallas, TX, under the trade designation Z9470, and a copolymer of atatetic polypropylene (aPP) and isotatctic polypropylene (iPP) available from Huntsman Chemical Corp., Salt Lake City, UT, under the trade designation Rexflex W111. The optical films can also include, for example in the second optical layers, a functionalized polyolefin, such as linear low density polyethylene-g-maleic anhydride (LLDPE-g-MA) such as that available from E.I. duPont de Nemours & Co., Inc., Wilmington, DE, under the trade designation Bynel 4105.

Exemplary combinations of materials in the case of polarizers include PEN/co-PEN, polyethylene terephthalate (PET)/co-PEN, PEN/sPS, PEN/Eastar, and PET/Eastar, where "co-PEN" refers to a copolymer or blend based upon naphthalene dicarboxylic acid (as described above) and Eastar is polycyclohexanedimethylene terephthalate commercially available from Eastman Chemical Co. Exemplary combinations of materials in the case of mirrors include PET/coPMMA, PEN/PMMA or PEN/coPMMA, PET/ECDEL, PEN/ECDEL, PEN/sPS, PEN/THV, PEN/co-PET, and PET/sPS, where "co-PET" refers to a copolymer or blend based upon terephthalic acid (as described above), ECDEL is a thermoplastic polyester commercially available from Eastman Chemical Co., and THV is a fluoropolymer commercially available from 3M. PMMA refers to polymethyl methacrylate and PETG refers to a copolymer of PET employing a second glycol (usually cyclohexanedimethanol). sPS refers to syndiotactic polystyrene.

Optical films suitable for use with the invention are typically thin. Suitable films may have varying thickness, but particularly they include films with thicknesses of less than 15 mils (about 380 micrometers), more typically less than 10 mils (about 250 micrometers), and preferably less than 7 mils (about 180 micrometers). During processing, a dimensionally stable layer may be included into the optical film by extrusion coating or coextrusion at temperatures exceeding 250 °C. Therefore, in some embodiments, the optical film should withstand exposure to temperatures greater than 250 °C. The optical film also normally undergoes various bending and rolling steps during processing, and therefore, in the typical exemplary embodiments of the present disclosure, the film should be flexible. Optical films suitable for use in the exemplary embodiments of the present disclosure can also include optional optical or non-optical layers, such as one or more protective boundary layers between packets of optical layers. The non-optical layers may be of any appropriate material suitable for a particular application and can be or can include at least one of the materials used in the remainder of the optical film.

In some exemplary embodiments, an intermediate layer or an underskin layer can be integrally formed with the optical film. One or more under-skin layers are typically formed by co-extrusion with the optical film, for example, to integrally form and bind the first and second layers. An intermediate layer can be integrally or separately formed on the optical film, for example, by being simultaneously co-extruded or sequentially extruded onto the optical film. The underskin layer or layers can include immiscible blends with a continuous phase and a disperse phase which also can aid in creating surface roughness and haze. The disperse phase can be polymeric or inorganic and have about the same or similar refractive index as the continuous phase. In some exemplary embodiments of such clear optical bodies, the refractive indexes of the materials making up the disperse and continuous phases differ from each other by no more than about 0.02. An example of underskin layer with refractive index matched blend is a continuous phase comprising SAN and a disperse phase comprising PETG(copolyester commercially available from Eastman Chemical under the tradename Eastar 6763). An example of underskins with a refractive index mismatched blend is a continuous phase of Xylex 7200 and a disperse phase of polystyrene.

### Asymmetric Surface Structures

The present disclosure is also directed to optical films having asymmetric surface structures, and methods for creating optical films having asymmetric surface structures. The asymmetric surface structures can be created, for example, by coextruding strippable skin layers onto the outside of the optical film, wherein the strippable skin layers comprise immiscible blends of polymers, followed by orientation, e.g., by stretching, of the optical film with the coextruded strippable skin layers attached. The asymmetric surface structures also can be created by other suitable methods, such as coating, casting or lamination. In addition to embossing with rough strippable skins, asymmetric structures in the surface can be formed from extrusion blending of immiscible polymers into the optical film or its skin layer. Subsequent orientation of the optical film can increase the asymmetry of the immiscible blend surface. The disperse phase polymer of the immiscible blend can have a refractive index match with the continuous phase polymer, however, the two or more polymers in the immiscible blend can also have some differences in refractive index.

Some suitable methods could benefit from pre-heating the optical film, such as where rough strippable skin layers are laminated onto the optical film. In some exemplary embodiments, the strippable skin layers can be formed directly on the optical film. During the deposition onto the optical film, after such deposition or during subsequent processing, under the appropriate conditions, the rough strippable skin layers can impart a surface texture having asymmetric (usually, elongated) surface structures to the optical film. When the rough strippable skins contain immiscible polymers that phase separate, the interface between the strippable skin and the optical film becomes rough. This phase separation, and thus surface roughness, can be further enhanced by uniaxial or unbalanced biaxial orientation of the film.

Unbalanced biaxial orientation is defined as a higher draw ratio or degree of orientation in one direction than another. In some exemplary embodiments, the uniaxial or unbalanced biaxial orientation can facilitate production of a surface texture including asymmetric surface structures on the optical film, for example by aligning phase-separated polymer domains into asymmetric (usually, elongated) protrusions that leave corresponding (but not necessarily similarly shaped) asymmetric depressions in the optical film. In other exemplary embodiments, the production of asymmetrical (usually, elongated) surface structures on a surface of an optical film may be facilitated by uniaxial or unbalanced biaxial orientation without appreciable elongation of the disperse phase regions in the rough strippable skin layers. In such exemplary embodiments, the major axis is usually substantially collinear with the larger stretch direction. Yet in other exemplary embodiments, the asymmetrical (usually, elongated) surface structures on an optical film may be produced when the optical body is not oriented or subjected to balanced biaxial orientation. In such exemplary embodiments, the major axis is usually substantially collinear with the machine direction (MD).

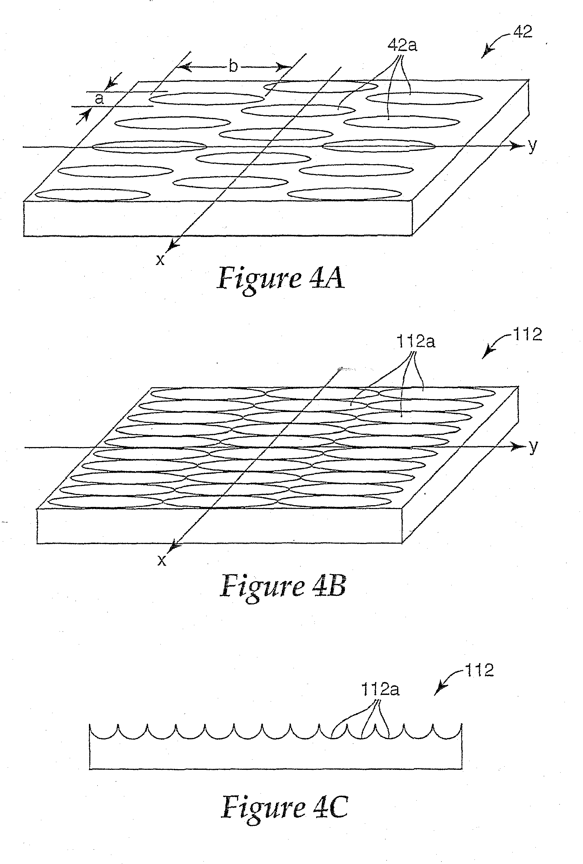

A perspective view of an optical film 42 having asymmetrical elongated depressions 42a is shown schematically in Fig. 4A. Typical asymmetrical elongated depressions according to the present disclosure each have a major dimension b aligned substantially along the major axis Y and a minor dimension a aligned substantially along a minor axis X. The major axis Y is usually substantially collinear with the direction of the higher draw ratio or with the machine direction. As illustrated in Figs. 4B and 4C, higher concentrations of the disperse phase 19 can be used to increase the density of the depressions 112a in an optical film 112. Fig. 4B shows a perspective view of the exemplary optical film 112, and Fig. 4C shows its cross-section along the minor axis X of the depressions 112a. Exemplary sizes for the minor and major dimensions vary considerably depending on the methods and materials used, and, in some exemplary embodiments, they even vary considerably across the same sample.

In other exemplary embodiments, however, average major and minor dimension can be calculated. In such a case, exemplary values of the minor dimension sometimes can be from about 0.2 and larger, and exemplary values of the major dimension can be from about 0.22 and larger. Approximate typical exemplary sizes of the minor dimension were found to include 0.8, 1.3, 3, 3.5, 4, 5 and 600 microns. Approximate typical exemplary sizes of the major dimension were found to include 2.6, 3, 4, 7, 9, 12, 15, 17, 20, 24, 27, 40, 95, 600 and 700 microns. Some exemplary films included structures that had a major dimension extending across the entire sample.

Exemplary aspect ratios of the depressions, defined as ratios of the major dimension to the minor dimension can be about 1.1 or larger. Some approximate other exemplary aspect ratios were found to include 1.4, 1.5, 2, 3, 4, 5, 6 and 23. In other exemplary embodiments the aspect ratio can exceed 100, especially where a particular feature extends across the entire sample under test. Exemplary average depths of depressions may be from about 0.2 micron to about 4 microns. Larger or smaller average depths may be desired in other exemplary embodiments, depending on the specific application, and in some exemplary embodiment can have exemplary sizes provided for the minor dimension.

The optical bodies constructed according to the present disclosure can be subjected to uniaxial or unbalanced biaxial orientation or relaxation, for example, at the draw ratios of about 1.1 to 1, 2 to 1, 3 to 1, 4 to 1, 5 to 1, 6 to 1 7 to 1, 8 to I, or greater. In some exemplary embodiments, the draw ratios roughly correspond to the average aspect ratios of the elongated asymmetrical depressions imparted with the rough strippable skin layers into the optical films of the present disclosure.

After stripping the rough strippable skin layers, the underlying optical film usually has a surface including depressions corresponding to the protrusions found on the rough strippable skin layers adjacent to the film surface, and, in some exemplary embodiments of the present disclosure, can have asymmetric surface structures, for example, elongated depressions corresponding to the protrusions (which may or may not be asymmetric or elongated) of an adjacent rough strippable skin layer. The optical film according to the present disclosure can be characterized by its roughness average (Ra), which is a measure of the surface profile arithmetic average deviation from the center-line; the root mean square roughness average (Rq), which is the root mean square of the distance of the roughness profile from its mean line, and the difference in peaks (Rz), which is the difference of the average of the 5 highest peaks to the 5 lowest valleys.

Other characteristics useful for describing the surface roughness of the optical films of the present disclosure include (i) volume, defined as the amount of liquid it would take to submerge the dataset to its highest point; (ii) negative volume, defined as the volume above the sample surface and below the zero level; (iii) positive volume, defined as the volume below the sample surface and above the zero level; (iv) a surface area index, defined as the ratio of the surface area to the area of an ideal plane; (v) Rv, defined as the maximum depth along the assessment length; (vi) Rvm, defined as the average of the 4 maximum depths observed along the assessment lengths; and (vii) ECD, defined as the equivalent circular diameter - the diameter of a circle that has the same area as a depression. Another useful characteristic is the major axis (e.g., axis Y shown in Figs. 4A and 4B), which is defined as the orientation of the major dimension of the best fit ellipse to an asymmetrical elongated depression. Additional or alternative analyses, which may be used to characterize the rough surfaces according to the present disclosure include Bearing Ratio Analysis. The Bearing Ratio analysis calculates the bearing ratio, tp, and the ratio of the bearing area to the total surface area. The bearing area is the area of the surface cut by a plane at a particular height. The bearing ratio curve shows tp in relation to the profile level. The analysis also calculates Htp, the height between two bearing ratios. Thirdly, the analysis calculates Swedish Height, the bearing ratio when tp1 = 5% and tp2 = 90%. Fourthly, the analysis determines core roughness (Rk), reduced peak height (Rpk), reduced valley depth (Rvk), peak material component (Mr1) and valley material component (Mr2). These values are described as follows. Rp - Maximum Profile Peak Height: the height difference between the mean line and the highest point over the evaluation length. Rpk - Reduced Peak Height: the top portion of the surface that will be worn away during the run-in period. Rv - Maximum Profile Valley depth: the height difference between the mean line and the lowest point over the evaluation length. Rvk - Reduced Valley Depth: the lowest portion of the surface that will retain lubricant. Stylus. X parameters are calculated as the average of these parameters over 1200 to 1274 lines. Yet other characteristics useful for describing the surface roughness of the optical films according to the present disclosure are described in the Examples that follow.

In typical embodiments of the present disclosure, roughness of the optical film surface after the rough strippable skin layers are removed should be sufficient to produce at least some haze. Amounts of haze suitable for some exemplary embodiments include about 5% to about 95%, about 20% to about 80%, about 50% to about 90%, about 10% to about 30%, and about 35% to 80%. Other amounts of haze may be desired for other applications. In other exemplary embodiments, roughness of the film surface after the rough strippable skin layers are removed should be sufficient to provide at least some redirection of light or to prevent coupling of the optical film surface to glass or another surface. For example, it has been found that surface structures of about 0.2 microns in size help reduce Moire problems.

### Material Compatibility and Methods

Preferably, the materials of the optical films, and in some exemplary embodiments, of the first optical layers, the second optical layers, the optional non-optical layers, and of the rough strippable skin layers are chosen to have similar rheological properties (e.g., melt viscosities) so that they can be co-extruded without flow instabilities. Typically, the second optical layers, optional other non-optical layers, and rough strippable skin layers have a glass transition temperature, Tg, that is either below or no greater than about 40°C above the glass transition temperature of the first optical layers. Desirably, the glass transition temperature of the second optical layers, optional non-optical layers, and the rough strippable skin layers is below the glass transition temperature of the first optical layers. When length orientation (LO) rollers are used to orient multilayer optical film, it may not be possible to use desired low Tg skin materials, because the low Tg material will stick to the rollers. If LO rollers are not used, such as with a simo-biax tenter, then this limitation is not an issue.

In some implementations, when the rough strippable skin layer is removed, there will be no remaining material from the rough strippable skin layer or any associated adhesive, if used. Optionally, as explained above, the strippable skin layer includes a dye, pigment, or other coloring material so that it is easy to observe whether the strippable skin layer is still on the optical body or not. This can facilitate proper use of the optical body. The strippable skin layer typically has a thickness of at least 12 micrometers, but other thicknesses (larger or smaller) can be produced as desired for specific applications. The thicknesses of the rough strippable skin layers and optional non-optical layers are generally at least four times, typically at least 10 times, and can be at least 100 times, the thickness of at least one of the individual first and second optical layers of the appropriate exemplary embodiments of optical films.

Various methods may be used for forming optical bodies of the present disclosure, which may include extrusion blending, coextrusion, film casting and quenching, lamination and orientation. As stated above, the optical bodies can take on various configurations, and thus the methods vary depending upon the configuration and the desired properties of the final optical body.

In the following, preferred embodiments are summarized:
1. An optical body, comprising:
   an optical film; and
   at least one rough strippable skin layer operatively connected to an adjacent surface of the optical film, the at least one rough strippable skin layer comprising:
      a first polymer,
      a second polymer different from the first polymer,
      and an additional material that is substantially immiscible in at least one of the first and second polymers.
2. The optical body of item 1, wherein the at least one rough strippable skin layer has adhesion to the adjacent surface of the optical fihn characterized by a peel force of about 2 to about 120 g/in.
3. The optical body of item 1, wherein the at least one rough strippable skin layer has adhesion to the adjacent surface of the optical film characterized by a peel force of about 4 to about 50 g/in.
4. The optical body of item 1, wherein the at least one rough strippable skin layer has adhesion to the adjacent surface of the optical film characterized by a peel force of about 5 to about 35 g/in.
5. The optical body of item 1, wherein the first polymer has a crystallinity that is lower than a crystallinity of the second polymer.
6. The optical body of item 1, wherein the material substantially immiscible in at least one of the first and second polymers comprises a third polymer.
7. The optical body of item 6, wherein the third polymer is selected from the group consisting of: styrene acrylonitrile, medium density polyethylene, modified polyethylene, polycarbonate and copolyester blend, ∈-caprolactone polymer, propylene random copolymer, poly(ethylene octene) copolymer, anti-static polymer, high density polyethylene, linear low density polyethylene and polymethyl methacrylate.
8. The optical body of item 1, wherein the material substantially immiscible in at least one of the first and second polymers includes inorganic material.
9. The optical body of item 1, wherein the first polymer is selected from the group consisting of: syndiotactic polypropylene, polypropylene copolymer, linear low density polyethylene and random copolymer of propylene and ethylene.
10. The optical body of item 1, wherein the second polymer is selected from the group consisting of: styrene acrylonitrile, medium density polyethylene, modified polyethylene, polycarbonate and copolyester blend, ∈-caprolactone polymer, propylene random copolymer, poly(ethylene octene) copolymer, anti-static polymer, high density polyethylene, linear low density polyethylene and polymethyl methacrylate.
11. The optical body of item 1, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.
12. The optical body of item 1, wherein the optical film comprises at least one underskin layer.
13. The optical body of item 12, wherein the underskin layer comprises styrene acrylonitrile, polycarbonate, PET or cycloaliphatic polyester/polycarbonate.
14. The optical body of item 12, wherein the underskin layer comprises a first material and a second material substantially immiscible in the first material, said second material being polymeric or inorganic.
15. The optical body of item 1, wherein the optical body comprises at least two rough strippable skin layers operatively connected to each of two opposing sides of the optical film.
16. The optical body of item 1, wherein the rough strippable skin layer further comprises a coloring agent.
17. The optical body of item 1, said optical body being substantially transparent.
18. The optical body of item 1, wherein the optical body comprises a birefringent material.
19. The optical body of item 1, further comprising at leas one smooth outer skin layer disposed over the at least one rough strippable skin layer.
20. An optical body, comprising:
   an optical film having a major axis and a minor axis; and
   at least one rough strippable skin layer operatively connected to an adjacent surface of the optical film, the at least one rough strippable skin layer comprising a continuous phase and a disperse phase;
   wherein a surface of the at least one rough strippable skin layer adjacent to the optical film comprises a plurality of protrusions and the adjacent surface of the optical film comprises a plurality of asymmetric depressions substantially corresponding to said plurality of protrusions.
21. The optical body of item 20, wherein the asymmetric protrusions have a major dimension substantially collinear with the major axis and a minor dimension substantially collinear with the minor dimension.
22. The optical body of item 21, wherein an average ratio of the major dimension to the minor dimension is at least about 1.5.
23. The optical body of item 21, wherein an average ratio of the major dimension to the minor dimension is from about 1.5 to about 23.
24. The optical body of item 20, wherein the continuous phase comprises a first polymer and the disperse phase comprises a second polymer that is substantially immiscible in the first polymer.
25. The optical body of item 24, wherein the at least one rough strippable skin further comprises a nucleating agent.
26. The optical body of item 24, wherein the first polymer has a crystallinity that is lower than a crystallinity of the second polymer.
27. The optical body of item 24, wherein the first polymer is selected from the group consisting of: syndiotactic polypropylene, linear low density polyethylene and random copolymer of propylene and ethylene.
28. The optical body of item 24, wherein the second polymer is selected from the group consisting of: styrene acrylonitrile, medium density polyethylene, modified polyethylene, polycarbonate and copolyester blend, ∈-caprolactone polymer, propylene random copolymer, poly(ethylene octene) copolymer, anti-static polymer, high density polyethylene, linear low density polyethylene and polymethyl methacrylate.
29. The optical body of item 20, wherein the disperse phase includes inorganic material.
30. The optical body of item 20, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.
31. The optical body of item 20, wherein the optical film comprises at least one underskin layer.
32. The optical body of item 31, wherein the underskin layer comprises styrene acrylonitrile, polycarbonate, PET or cycloaliphatic polyester/polycarbonate.
33. The optical body of item 31, wherein the underskin layer comprises a first material and a second material substantially immiscible in the first material, said second material being polymeric or inorganic.
34. The optical body of item 20, wherein the optical body comprises at least two rough strippable skin layers operatively connected to each of two opposing sides of the optical film.
35. The optical body of item 20, wherein the rough strippable skin layer further comprises a coloring agent.
36. The optical body of item 20, said optical body being substantially transparent.
37. The optical body of item 20, wherein the optical body comprises a birefringent material.
38. The optical body of item 20, wherein the at least one rough strippable skin layer has adhesion to the adjacent surface of the optical film characterized by a peel force of about 2 to about 120 g/in.
39. The optical body of item 20, wherein the at least one rough strippable skin layer has adhesion to the adjacent surface of the optical film characterized by a peel force of about 4 to about 50 g/in.
40. The optical body of item 20, wherein the at least one rough strippable skin layer has adhesion to the adjacent surface of the optical film characterized by a peel force of about 5 to about 35 g/in.
41. The optical body of item 20, further comprising at least one smooth outer skin layer disposed over the at least one rough strippable skin layer.
42. An optical body, comprising:
   an optical film having a first surface, a major axis and a minor axis, said first surface comprising a plurality of asymmetric depressions, each asymmetric depression having a major dimension substantially collinear with the major axis and a minor direction substantially collinear with the minor axis.
43. The optical body of item 42, wherein the first major surface comprises a birefringent material.
44. The optical body of item 42, wherein the asymmetric depressions have an average depth from about 0.2 micron to about 4 microns.
45. The optical body of item42, wherein the asymmetric depressions have an average minor dimension from about 0.2 micron to about 5 microns.
46. The optical body of item42, wherein the asymmetric depressions have an average major dimension from about 4 micron to about 40 microns.
47. The optical body of item 42, wherein the asymmetric depressions have an average ratio of the major dimension to the minor dimension from about 1.1 to about 23.
48. The optical body of item 42, wherein the optical film is characterized by a haze of at least about 10%.
49. The optical body of item 42, wherein the optical film is characterized by a haze of at least about 35%.
50. The optical body of item 42, wherein the optical film is characterized by a haze of at least about 50%
51. The optical body of item42, wherein the first surface of the optical film is characterized by a Bearing Ratio Rvk of at least about 130 nm.
52. The optical body of item 42, wherein the first surface of the optical film is characterized by Bearing Ratio Rpk of at least about 200 nm.
53. The optical body of item 42, wherein the first surface of the optical film is characterized by Stylus Rv of at least about 100 nm.
54. The optical body of item42, wherein the first surface of the optical film is characterized by Stylus Rvk of at least about 50 nm.
55. The optical body of item 42, wherein the optical film comprises at least one of: a multilayer polarizer, a multilayer reflector, an optical film having a continuous and a disperse phase, a layer comprising styrene acrylonitrile, a layer comprising polycarbonate, a layer comprising PET, and a layer comprising a cycloaliphatic polyester/polycarbonate.
56. The optical body of item 42, wherein the optical film comprises at least one underskin layer.
57. The optical body of item56, wherein the underskin layer comprises styrene acrylonitrile, polycarbonate, PET or cycloaliphatic polyester/polycarbonate.
58. The optical body of item 56, wherein the underskin layer comprises a first material and a second material substantially immiscible in the first material, said second material being polymeric or inorganic.
59. An optical body, comprising:
   an optical film; and
   at least one rough strippable skin layer operatively connected to a surface of the optical film, the at least one rough strippable skin layer comprising a continuous phase and a disperse phase, said continuous phase comprising at least one of: a polypropylene, a polyester, a linear low density polyethylene, a nylon and copolymers thereof.
60. The optical body of item 59, wherein the at least one rough strippable skin layer has adhesion to the adjacent surface of the optical film characterized by a peel force of about 2 to about 120 g/in.
61. The optical body of item 59, wherein the at least one rough strippable skin layer has adhesion to the adjacent surface of the optical film characterized by a peel force of about 4 to about 50 g/in.
62. The optical body of item 59, wherein the at least one rough strippable skin layer has adhesion to the adjacent surface of the optical film characterized by a peel force of about 5 to about 35 g/in.
63. The optical body of item 59, wherein the disperse phase comprises a polymer that is substantially immiscible in the continuous phase.
64. The optical body of item 63, wherein the at least one rough strippable skin further comprises a nucleating agent.
65. The optical body of item 63, wherein the polymer of the disperse phase has a crystallinity that is higher then a crystallinity of the continuous phase.
66. The optical body of item 63, wherein the disperse phase comprises at least one of:
   styrene acrylonitrile, medium density polyethylene, modified polyethylene, polycarbonate and copolyester blend, ∈-caprolactone polymer, propylene random copolymer, poly(ethylene octene) copolymer, anti-static polymer, high density polyethylene, linear low density polyethylene, CaCO₃ and polymethyl methacrylate.
67. The optical body of item 59, wherein the continuous phase comprises at least one of: syndiotactic polypropylene, linear low density polyethylene and random copolymer of propylene and ethylene.
68. The optical body of item 59, wherein the disperse phase includes inorganic material.
69. The optical body of item 59, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.
70. The optical body of item 59, wherein the optical film comprises at least one underskin layer.
71. The optical body of item 70, wherein the underskin layer comprises styrene acrylonitrile, polycarbonate, PET or cycloaliphatic polyester/polycarbonate.
72. The optical body of item 70, wherein the underskin layer comprises a first material and a second material substantially immiscible in the first material, said second material being polymeric or inorganic.
73. The optical body of item 59, wherein the optical body comprises at least two rough strippable skin layers operatively connected to each of two opposing sides of the optical film.
74. The optical body of item 59, wherein the rough strippable skin layer further comprises a coloring agent.
75. The optical body of item 59, said optical body being substantially transparent.
76. The optical body of item 59, wherein the optical body comprises a birefringent material.
77. The optical body of item 59, further comprising at least one smooth outer skin layer disposed over the at least one rough strippable skin layer.
78. A method of making an optical body, comprising the steps of:
   disposing at least one rough strippable skin layer on an adjacent surface of an optical film, such that the at least one rough strippable skin layer is operatively connected to the adjacent surface of the optical film, the at least one strippable skin layer comprising a first polymer, a second polymer different from the first polymer, and an additional material that is substantially immiscible in at least one of the first and second polymers.
79. The method of item 78, wherein the first polymer is selected from the group consisting of: syndiotactic polypropylene, linear low density polyethylene and random copolymer of propylene and ethylene.
80. The method of item 78, wherein the second polymer is selected from the group consisting of: styrene acrylonitrile, medium density polyethylene, modified polyethylene, polycarbonate and copolyester blend, ∈-caprolactone polymer, propylene random copolymer, poly(ethylene octene) copolymer, anti-static polymer, high density polyethylene, linear low density polyethylene and polymethyl methacrylate.
81. The method of item 78, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.
82. The method of item 78, wherein the optical film comprises at least one underskin layer.
83. The method of item 82, wherein the underskin layer comprises styrene acrylonitrile, polycarbonate, PET or cycloaliphatic polyester/polycarbonate.
84. The optical body of item 82, wherein the underskin layer comprises a first material and a second material substantially immiscible in the first material, said second material being polymeric or inorganic.
85. The method of item 78, wherein two rough strippable skin layers are disposed on two opposing surfaces of the optical film.
86. The method of item 78, wherein the rough strippable skin layer further comprises a coloring agent.
87. The method of item 78, further comprising disposing at least one smooth outer skin layer disposed over the at least one rough strippable skin layer.
88. The method of item 78, wherein the step of disposing comprises co-extruding, coating, casting or laminating the at least one rough strippable skin layer with the optical film.
89. The method of item 78, wherein disposing at least one rough strippable skin layer on an adjacent surface of an optical film comprises forming the at least one rough strippable skin layer on said optical film.
90. The method of making an optical body of item 78, further comprising orienting the optical body.
91. The method of forming an optical body according to item 90, wherein orienting comprises stretching the rough strippable skin layer with the optical film.
92. The method of forming an optical body according to item 90, wherein orienting comprises uniaxial stretching.
93. The method of forming an optical body according to item 90, wherein orienting comprises biaxial stretching.
94. The method of forming an optical body according to item 93, wherein the biaxial stretching is unbalanced in at least two substantially orthogonal directions.
95. The method of forming an optical body according to item 93, wherein the unbalanced stretching has a draw ratio of from about 1.1 to about 8.
96. A method of making an optical body, comprising the steps of:
   disposing at least one rough strippable skin layer on an adjacent surface of an optical film, such that the at least one rough strippable skin layer is operatively connected to the adjacent surface of the optical film, the at least one strippable skin layer comprising a continuous phase and a disperse phase; and
   subjecting the optical film together with the at least one rough strippable skin layer to uniaxial or unbalanced biaxial orientation.
97. The method ofitem 96, wherein the continuous phase comprises at least one of:
   syndiotactic polypropylene, linear low density polyethylene and random copolymer of propylene and ethylene.
98. The method of item 96, wherein the disperse phase comprises at least one of:
   styrene acrylonitrile, medium density polyethylene, modified polyethylene, polycarbonate and copolyester blend, ∈-caprolactone polymer, propylene random copolymer,
   poly(ethylene octene) copolymer, anti-static polymer, high density polyethylene, linear low density polyethylene, CaCO₃ and polymethyl methacrylate.
99. The method of item 96, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.
100. The method of item 96, wherein the optical film comprises at least one underskin layer.
101. The method of item 100, wherein the underskin layer comprises styrene acrylonitrile, polycarbonate, PET or cycloaliphatic polyester/polycarbonate.
102. The optical body of item 100, wherein the underskin layer comprises a first material and a second material substantially immiscible in the first material, said second material being polymeric or inorganic.
103. The method of item 96, wherein two rough strippable skin layers are disposed on two opposing surfaces of the optical film.
104. The method of item 96, wherein the rough strippable skin layer further comprises a coloring agent.
105. The method of item 96, further comprising disposing at least one smooth outer skin layer disposed over the at least one rough strippable skin layer.
106. The method of item 96, wherein the step of disposing comprises co-extruding, coating, casting or laminating the at least one rough strippable skin layer with the optical film.
107. The method of item 96, wherein disposing at least one rough strippable skin layer on an adjacent surface of an optical film comprises forming the at least one rough strippable skin layer on said optical film.
108. The method of forming an optical body according to item 96, wherein orienting comprises stretching the rough strippable skin layer with the optical film.
109. The method of forming an optical body according to item 108, wherein the unbalanced stretching has a draw ratio of from about 1.1 to about 8.
110. A method of making an optical body, comprising the step of:
   disposing at least one rough strippable skin layer on an adjacent surface of an optical film, such that the at least one rough strippable skin layer is operatively connected to the adjacent surface of the optical film, the at least one strippable skin layer comprising a continuous phase and a disperse phase, said continuous phase comprising at least one of: a polypropylene, a polyester, a linear low density polyethylene, a nylon and copolymers thereof.
111. The method of item 110, wherein the continuous phase comprises at least one of: syndiotactic polypropylene and random copolymer of propylene and ethylene.
112. The method of item 110, wherein the disperse phase comprises at least one of: styrene acrylonitrile, medium density polyethylene, modified polyethylene, polycarbonate and copolyester blend, ∈-caprolactone polymer, propylene random copolymer, poly(ethylene octene) copolymer, anti-static polymer, high density polyethylene, linear low density polyethylene, CaCO₃ and polymethyl methacrylate.
113. The method of item 110, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.
114. The method of item 110, wherein the optical film comprises at least one underskin layer.
115. The method of item 114, wherein the underskin layer comprises styrene acrylonitrile, polycarbonate, PET or cycloaliphatic polyester/polycarbonate.
116. The optical body of item 114, wherein the underskin layer comprises a first material and a second material substantially immiscible in the first material, said second material being polymeric or inorganic.
117. The method of item 110, wherein two rough strippable skin layers are disposed on two opposing surfaces of the optical film.
118. The method of item 110, wherein the rough strippable skin layer further comprises a coloring agent.
119. The method of item 110, further comprising disposing at least one smooth outer skin layer disposed over the at least one rough strippable skin layer.
120. The method of item 110, wherein the step of disposing comprises co-extruding, coating, casting or laminating the at least one rough strippable skin layer with the optical film.
121. The method of item 110, wherein disposing at least one rough strippable skin layer on an adjacent surface of an optical film comprises forming the at least one rough strippable skin layer on said optical film.
122. The method of making an optical body of item 110, further comprising orienting the optical body.
123. The method of forming an optical body according to item 122, wherein orienting comprises stretching the rough strippable skin layer with the optical film.
124. The method of forming an optical body according to item 122, wherein orienting comprises uniaxial stretching.
125. The method of forming an optical body according to item 122, wherein orienting comprises biaxial stretching.
126. The method of forming an optical body according to item 125, wherein the biaxial stretching is unbalanced in at least two substantially orthogonal directions.
127. The method of forming an optical body according to item 125, wherein the unbalanced stretching has a draw ratio of from about 1.1 to about 8.

### Examples

Exemplary embodiments of the present disclosure can be constructed as described in detail in the following examples.

### 1. Two-Polymer Rough Strippable Skin Layers

### Example 1

A rough surface was produced on an optical film by cast co-extrusion of a rough strippable skin onto an optical film during a film production process. The rough strippable skin included a blend of two mechanically miscible polymers, where one of the polymers was a homopolymer of ∈-caprolactone. When the co-extruded cast web was stretched in a tenter oven during the optical film production process, the ∈-caprolactone polymer in the rough strippable skin layers imparted a surface texture onto the optical film. This texture became apparent after the skin was stripped away from the optical film.

The density and roughness of the texture of the rough surface were controlled by the percentage of ∈-caprolactone homopolymer blended into the rough strippable skin layers, the degree of mixing in the extruder, quenching conditions during formation of the cast web, the cast web reheating temperature, the tenter oven stretch ratio, and tenter oven residence time. Percentages of ∈-caprolactone homopolymer in the rough strippable skin layers of the order of about 1 to about 3 percent were sufficient to impart haze in the range of about 60% to about 95%, as measured using a Haze-Guard Plus haze meter from BYK-Gardner in accordance with typical procedures described in ASTM D1003-00.

Several different rough strippable skin materials were evaluated using laboratory-scale co-extrusion equipment. Several constructions produced are shown in Table I. The ∈-caprolactone polymer used in this example was TONE™ P-787 available from Dow Chemical Company. The P-787 polymer has a melting temperature of 60°C and a crystallization temperature of 18°C. Crystallization data from Dow Chemical Company indicates that the TONE™ polymers, as molded, exhibit approximately 50 percent crystallinity. In this experiment, cast webs were prepared with rough strippable skin layers containing about 0, 1, 3, and 5 percent of TONE™ P-787 blended with Finaplas 1571 syndiotactic polypropylene resin from Atofina, now Total Petrochemicals, Inc. The optical film was comprised of Tyril™ 100 styrene acrylonitrile (SAN) copolymer from Dow Chemical Company.

**Table 1. Summary of Cast Web Constructions**

| Continuous Phase | Disperse Phase | Disperse Phase Concentration (wt %) | Optical Film Material | Optical Film Haze (%) | Ra (nm) | Rq (nm) | Rz (µm) |
|---|---|---|---|---|---|---|---|
| Finaplas 1571 | None | 0 | Tyril 100 SAN | 0.5 | 12 | 16 | 0.5 |
| Finaplas 1571 | TONE™ P-787 | 1 | Tyril 100 SAN | 63 | 181 | 345 | 5.7 |
| Finaplas 1571 | TONE™ P-787 | 3 | Tyril 100 SAN | 95 | 579 | 887 | 9.3 |
| Finaplas 1571 | TONE™ P-787 | 5 | Tyril 100 SAN | 95 | NM | NM | NM |

Some of these cast web samples were stretched using a batch stretcher, under the stretching conditions shown in Table II.

**Table 2. Summary of Stretching Conditions**

| | |
|---|---|
| Draw Ratio | 1 x 6 (MD x TD) |
| Heating oven | 140°C @ 75% fan speed |
| Preheat time | 150 seconds |

The stretched optical bodies appeared relatively transparent, for example, for about 1% of TONE™ P-787 in the Finaplas 1571 with both rough strippable skin layers adhered to the optical film the haze from the optical body was about 11%. However, when the rough strippable skin layers were removed from the film surfaces, the underlying SAN layers exhibited significant haze, as measured using a BYK-Gardner Hazegard haze meter. The haze levels and some surface roughness data for the Tyril 100 SAN layers with rough strippable skin layers containing different amounts of TONE™ P-787 in the Finaplas 1571 polypropylene are summarized in Table I.

Some of the textured SAN copolymer films as well as the skins used to impart the textures were subjected to scanning electron microscopy (SEM). The SEM photomicrographs in this and the following example were prepared by removing a section from the optical film sample and the corresponding rough strippable skin layer. The mating surfaces were mounted on aluminum stubs. The specimens were sputter coated with gold and were examined using a Model XL30 Scanning Electron Microscope, manufactured by FEI, operating in high-vacuum mode. All micrographs were taken at a viewing angle of 45° off the surface of the stub. Representative images were photomicrographed; each photomicrograph includes a length bar indicating the size scale of the features.

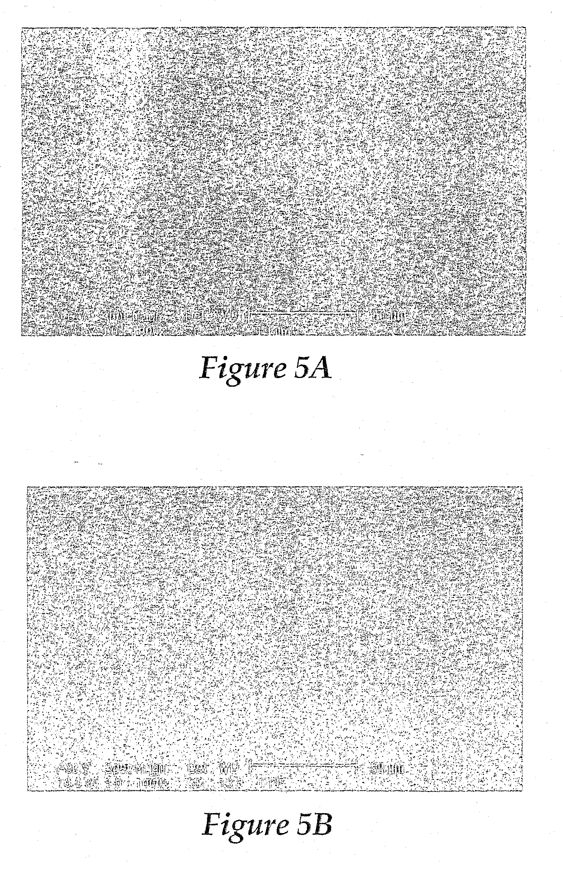

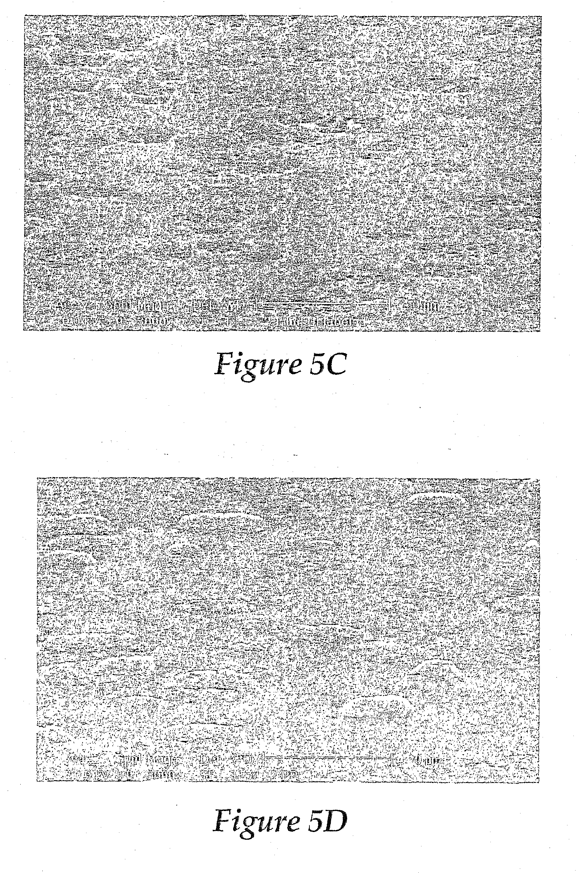

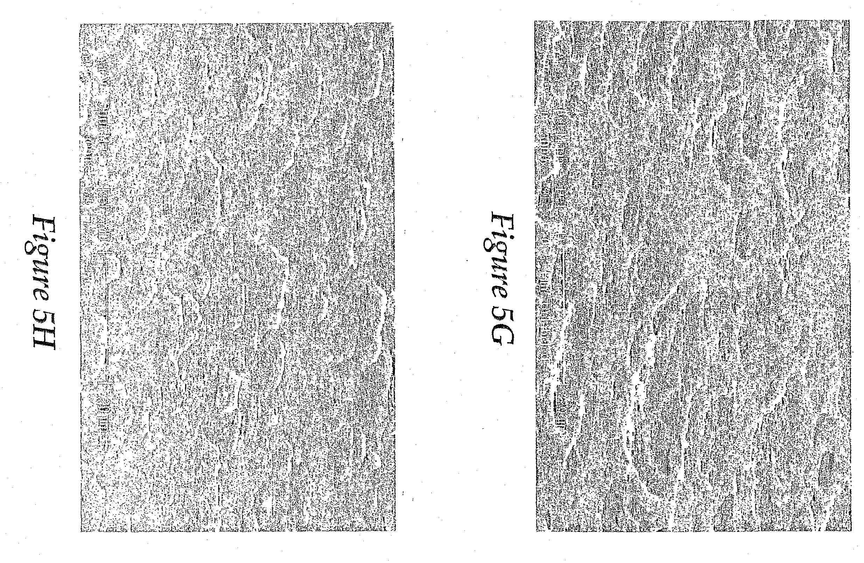

Fig. 5A shows an SEM photomicrograph of a SAN film after the removal of rough strippable skin layers containing about 0% of P-787. Fig. 5B shows an SEM photomicrograph of the rough strippable skin layer containing about 0% of P-787 used to impart the texture shown in Fig. 5A. Fig. 5C shows an SEM photomicrograph of a SAN film after the removal of rough strippable skin layers containing about 1% of P-787. Fig. 5D shows an SEM photomicrograph of a rough strippable skin layer containing about 1% of P-787 used to impart the texture of Fig. 5C. Fig. 5G shows an SEM photomicrograph of a SAN film after the removal of the rough strippable skin layers containing about 3% of P-787. Fig. 5H shows an SEM photomicrograph of a rough strippable skin layer containing about 3% of P-787.

### Example 2

A multi-layer reflective polarizer was constructed with first optical layers comprising PEN (polyethylene naphthalate) and second optical layers comprising coPEN (copolyethylene naphthalate). The PEN and coPEN were coextruded through a multilayer melt manifold and multiplier to form 825 alternating first and second optical layers. This multi-layer film also contained two internal and two external protective layers of the same coPEN as the second optical layers for a total of 829 layers. In addition, two external underskin layers were coextruded on both sides of the optical layer stack. The underskin layers were each about 25 micrometers thick and were comprised of styreneacrylonitrile copolymer (SAN) (Tyril Crystone 880B from The Dow Chemical Company). Rough strippable skin layers comprised of a blend of 99.5 weight percent syndiotactic polypropylene (Finaplas 1571 from Atofina, now Total Petrochemicals, Inc.) and 0.5 weight percent of ∈-caprolactone polymer (Tone P-787 from The Dow Chemical Company) were formed over the SAN layers. An extruded cast web of the above construction was then heated in a tentering oven with air at 143°C for 120 seconds and then uniaxially oriented at a 5.4:1 draw ratio.

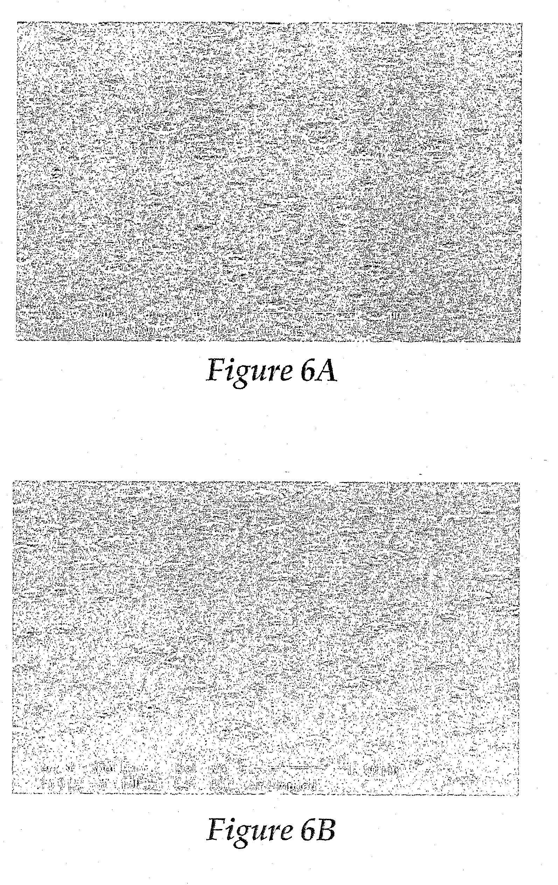

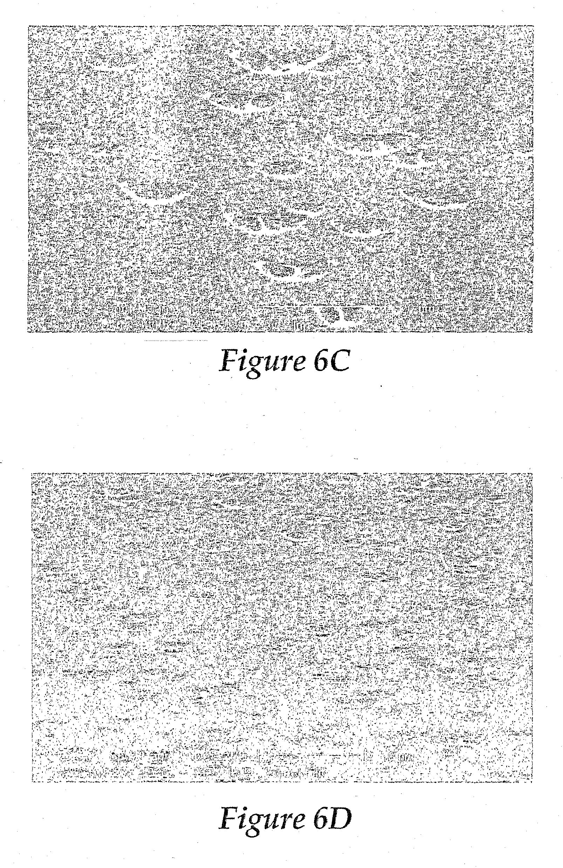

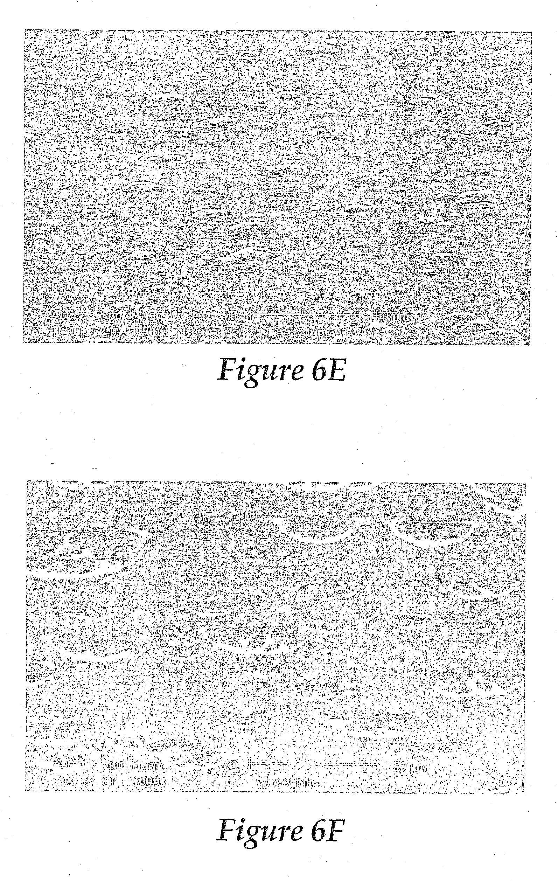

When the rough strippable skin layers were removed from the optical film, the optical film exhibited a 40% haze level. Scanning electron microscopy (SEM) photomicrographs of the surfaces of the optical film on both the "air" side (referring to the casting wheel configuration) and the "wheel" side of the film and of the removed strippable skin layers are shown in Figures 6A - F. Fig. 6A shows an SEM photomicrograph of the air side optical film surface after the removal of rough strippable skin layers containing about 0.5% of P-787. Fig. 6B shows an SEM photomicrograph of the air side of the rough strippable skin layer containing about 0.5 % of P-787 used to impart the texture shown in Fig. 6A. Fig. 6C shows an enlarged SEM photomicrograph of the air side optical film surface shown in Fig. 6A. Fig. 6D shows an SEM photomicrograph of the wheel side optical film surface after the removal of rough strippable skin layers containing about 0.5% of P-787. Fig. 6E shows an SEM photomicrograph of the wheel side rough strippable skin layer containing about 0.5% of P-787 used to impart the texture of Fig. 6D. Fig. 6F shows an enlarged SEM photomicrograph of the wheel side optical film surface shown in Fig. 6D.

Some exemplary features on the film of Example 2 were found to have exemplary major dimensions of about 12 microns to about 15 microns and exemplary minor dimensions of about 3 microns to about 3.5 microns minor dimension with typical aspect ratios of about 4:1 to about 5:1. The exemplary major and minor dimensions were determined from the SEM micrographs. Typical feature dimensions presented in the table below were determined using a Wyko optical profiler Model NT3300 from Veeco Instruments.

The force needed to peel the rough strippable skin layer from the optical film was determined using the method described above. The sample strip was cut with the machine direction (MD) of the optical film parallel to the length direction of the strip. The typical peel force for the strippable skin of this example was determined to be about 3.5 grams per inch. The value of the peel adhesion force may be influenced by the stiffness and hence, by the thickness and material properties of the rough strippable skin layer. For the present example, the strippable skin layer thickness was approximately 0.75 mil. Different ranges of peel force values could be obtained if the rough strippable skin layer thickness were different.

The 0.5% P-787 sample of this example as well as the 1% and 3% P-787 samples from Example 1 above were also analyzed using a WYKO NT-3300 optical profiling system form Veeco Instruments. Additional analyses of the captured images were carried out using ADCIS Aphelion™ image analysis software and traditional images analysis techniques. The samples for interferometry were prepared by vacuum sputtering a thin metal coat onto the surface to increase the reflectivity. The summary of the topographic analysis of the samples described above is presented in Table 3. The surface area index shown in Table III is defined as the ratio of the measured surface area to the projected area (250 µm x 250 µm).

**Table 3**

| | 0.5 % sample | 1% sample | 3% sample |
|---|---|---|---|
| % Area More Than 0.2 µm Below the Mean Surface | 22.5+/-2.5 | 31.5+/-1.6 | 49.4+/-0.6 |
| % Area More Than 0.3µm Below the Mean Surface | 14.2+/-1.1 | 20.1+/-1.3 | 41.6+/-0.5 |
| Negative Volume in µm3 | 6581+/-504 | 8224+/-537 | 20856+/-903 |
| Surface Area Index | 1.145+/-.019 | 1.128+/-.006 | 1.453+/-.020 |
| Stylus X Rv in µm | -1889+/-208 | -1420+-42 | -2613+-88 |
| Stylus X Rvm in µm | -994+/-90 | -916+/-39 | -1843+/-36 |
| Stylus X Number Valid Lines | 6261 | 5724 | 5298 |
| Stylus X Long Cutoff Freq in µm | 60 | 60 | 60 |
| Stylus X Assessment Length in µm | 240 | 240 | 240 |
| Stylus X Num Sample Lengths | 4 | 4 | 4 |

The summary of image analysis of the same three samples is presented in Table 4. In particular, the table mainly presents the averages and standard deviations for measurements of the individual structures (e.g., depressions) in the optical film surface. The major axis in this table is the orientation of the major directions of the best fit ellipses to the surface structures (e.g., depressions). The samples were aligned so that the major dimensions were generally parallel to the reference direction. Notably, the standard deviations show a relatively well aligned arrangement.

**Table 4**

| | | Area in µm2 | Aspect Ratio (min/max) | Major Axis in degrees | Height in µm | Width in µm | ECD in µm | Number per mm2 |
|---|---|---|---|---|---|---|---|---|
| 0.5% | Average | 29.6 | 0.43 | -0.28 | 3.97 | 8.71 | 5.08 | 4307 |
| | Std. | 1.8 | 0.02 | 1.87 | 0.26 | 0.34 | 0.26 | 238 |
| | Dev. | | | | | | | |
| 1% | Average | 22.7 | 0.32 | -0.98 | 2.94 | 8.42 | 4.24 | 9946 |
| | Std. | 2.5 | 0.01 | 1.16 | 0.22 | 0.50 | 0.26 | 308 |
| | Dev. | | | | | | | |
| 3% | Average | 19.3 | 0.34 | -3.72 | 2.77 | 6.83 | 3.54 | 15477 |
| | Std. | 2.7 | 0.01 | 0.79 | 0.26 | 0.49 | 0.37 | 916 |
| | Dev. | | | | | | | |

Average sizes of the major dimensions measured for the 0.5, 1 and 3% samples were found to be respectively 8.71+/- 0.34, 8.42+/-0.50 and 6.83+/-0.49. Average sizes of the minor dimensions measured for the 0.5, 1 and 3% samples were found to be respectively 3.97+/- 0.26, 2.94+/-0.22 and 2.77+/-0.26.

### Example 3

A multi-layer optical film containing 896 layers was made via co-extrusion and orientation processes where PET was the first, high index material and coPET was the second, low index material. A feedblock method (such as that described in U.S. Pat. No.3,801,429, incorporated by reference herein) was used to generate about 224 layers with a layer thickness range sufficient to produce an optical reflection band with a fractional bandwidth of about 30%. An approximate linear gradient in layer thickness was produced by the feedblock for each material, with the ratio of thickest to thinnest layers being about 1.30.

Isotropic copolyester (referred to as "coPET") used to form the low index optical layers was synthesized in a batch reactor with the following raw material charge: 79.2 kg dimethyl terephthalate, 31.4 kg dimethyl cyclohexane dicarboxylate, 54 kg cyclohexane dimethanol, 59.2 kg ethylene glycol, 16.5 kg neopentyl glycol, 1.2 kg trimethylol propane, 49.6 g zinc acetate, 20.7 g cobalt acetate, and 80 g antimony triacetate. Under pressure of 0.20 MPa, this mixture was heated to 254°C while removing methanol. After 35.4 kg of methanol was removed, 69.2 g of triethyl phosphonoacetate was charged to the reactor and then the pressure was gradually reduced to 133 Pa while heating to 285°C. The condensation reaction by-product, ethylene glycol, was continuously removed until a polymer with an intrinsic viscosity of 0.64 dL/g, as measured in 60/40 wt.% phenol/o-dichlorobenzene, was produced. It had a Tg of 67°C as measured by DSC using ASTM D3418 with a scan rate of 20°C/min and removal of the thermal history by taking the second heat Tg.

PET with an intrinsic viscosity (IV) of 0.60 dl/g was delivered to the feedblock by one extruder at a rate of 50 kg/hr and coPET-F was delivered to the feedblock by another extruder at a rate of 43 kg/hr. These melt streams were directed to the feedblock to create 224 alternating layers of PET and coPET-F with the two outside underskin layers of PET. The underskin layers were much thicker than the optical layers, the former containing about 20% of the total melt-flow of the PET (10% for each side).

The material stream then passed through an asymmetric two-time multiplier (such as described, for example in U.S. Patent Nos. 5,094,788 and 5,094,793, incorporated by reference herein). The multiplier thickness ratio was about 1.25:1. Each set of 224 layers has the approximate layer thickness profile created by the feedblock, with the overall thickness factors determined by the multiplier and film extruder rates. The material stream then passed through an additional two times multiplier with the thickness ratio of about 1.55:1.

After the multipliers, rough strippable skin layers comprising a 50:50 blend of polypropylene copolymer (Atofma, now Total Petrochemicals, Inc. product PP8650) and polyethylene octene copolymer (Affinity 1450) were added to the melt stream. This immiscible polymer blend was fed to a third extruder at a rate of 22.7 kg/hr. The multilayered melt stream then passed through a film die and onto a water-cooled casting wheel. The inlet water temperature of the casting wheel was 8 °C. A high voltage pinning system was used to pin the extrudate to the casting wheel. The pinning wire was about 0.1 mm thick, and a voltage of 5.2 kV was applied. The pinning wire was positioned manually by an operator about 3 to 5 mm from the web at a point of contact with the casting wheel to obtain a cast film with smooth appearance. The casting wheel speed was 22.4 fpm to produce a cast film approximately 17 mils thick. The rough strippable skin layer extruder and associated melt process equipment was maintained at 254 C. The PET and CoPET extruders, feedblock, skin-layer modules, multiplier, die, and associated melt process equipment were maintained at 266 C.

A 17.8 cm by 25.4 cm sample of the multi-layer film was fed into a standard film tenter for uniaxial stretching. The cast web piece was gripped by the tenter clips on the edges, as it is customary for continuously oriented films. The film near the clips could not contract in the machine direction, because the spacing between the tenter clips is fixed. However, because the web was not constrained on the leading edge or trailing edge, it contracted in the machine direction, the contraction being larger with the increased distance from the clips. With an aspect ratio large enough, the center of the sample was able to fully contract for a true uniaxial orientation, i.e., where the contraction is equal to the square root of the transverse direction stretch ratio. The sample was stretched in the TD, with initial clip distance of 20.3 cm to final clip distance of 142 cm, and then allowed to relax at the stretch temperature to 129 cm. The stretching was done at a tenter temperature of 99 C with a stretch ratio of 6:1 and a stretch rate of 5 cm/s. The initial to final part size was not the same as the stretch ratio (6: 1), because of the unstretched material within the tenter clips.

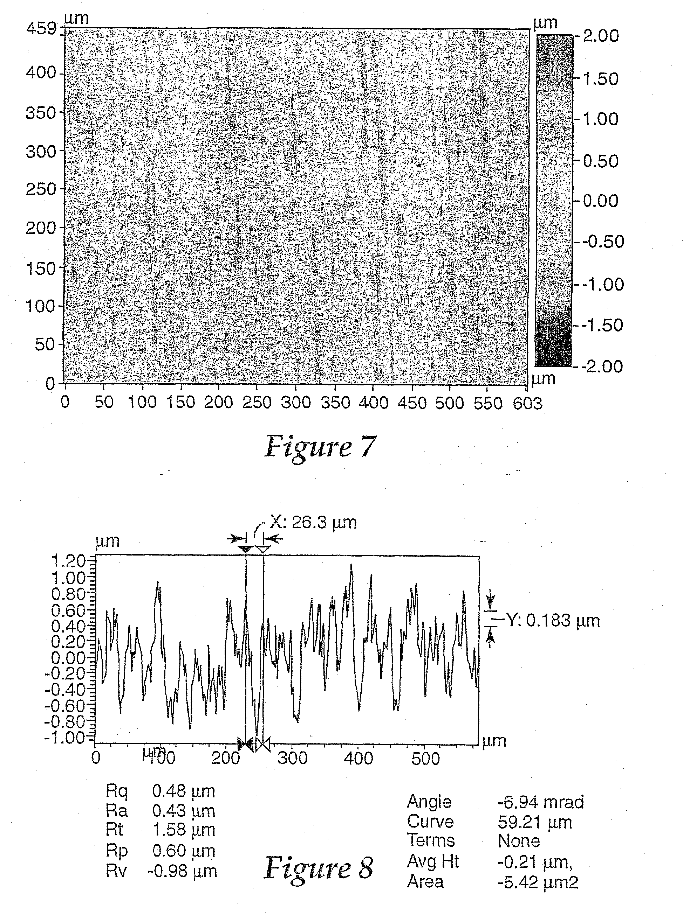

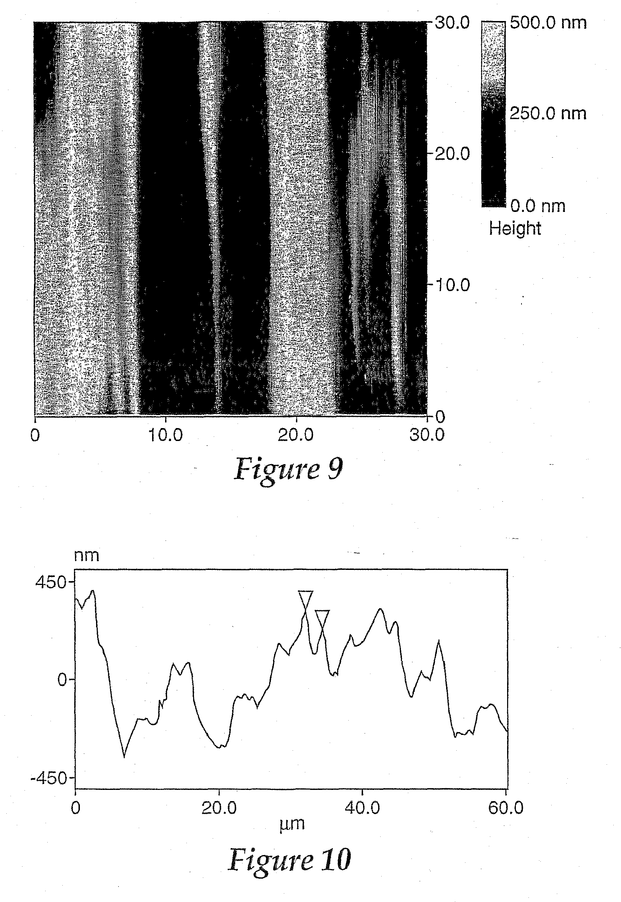

Upon stretching in the tenter, the skin layers became hazy and rough. After stripping away the skin layers, the outer surface of the underlying multi-layer reflective polarizer was rough with elongated structures similar and corresponding to the removed skin layers. Haze of the resulting film was measured with a BYK-Gardner haze meter to be about 30%. When the textured optical film was placed on top of a recycling cube of diffuse light, the increase in brightness was measured to be about 67% higher than without the optical film. The recycling cube can be fabricated using a spot photometer and a suitable backlight with a polarizer placed between the two so that only one polarization of light from the backlight is measured by the photometer. Surface roughness of this film was measured with both AFM (Atomic Force Microscopy) and Wyko (optical interferometry in VSI mode). Wyko analysis measured a rough surface structure with Rq = 435 nm, as shown in Figs. 7 and 8. Alternatively, AFM analysis measured a rough surface structure with Rms = 2.74 nm and Ra = 1.84 nm, as shown in Figs. 9 and 10. An approximate size of a typical minor dimension of the surface features produced in this examples was found to be characterized by a minor dimension of about 5 microns and by a major dimension of about 40 microns. However, some features showed much greater major dimensions and some even extended across the sample under test. Table 5 contains various surface characterizations of the exemplary embodiment described in Example 3. "BR" refers to Bearing Ratio and "SX" refers to Stylus X. The top row of data represents average values and the second row of data represents standard deviations.

**Table 5**

| BR Rvk | BR Rpk | Pos. Vol. | Neg. Vol. | Vol. | SArea Index | SX Rp | SX Rpk | SX Rv | SX Rvk |
|---|---|---|---|---|---|---|---|---|---|
| 490.87 | 406.87 | 34599.57 | 45612.61 | 187737.71 | 1.15 | 756.81 | 595.09 | 179.94 | 106.27 |
| 57.11 | 50.00 | 4184.44 | 3030.78 | 21128.58 | 0.01 | 144.06 | 211.95 | 17.70 | 33.73 |

### Example 4

A multi-layer reflective polarizer was constructed with first optical layers comprising PEN (polyethylene naphthalate) and second optical layers comprising coPEN (copolyethylene naphthalate) using a low crystallinity polypropylene and amorphous polyester film. The PEN and coPEN were coextruded through a multi-layer melt manifold and multiplier to form 825 alternating first and second optical layers. This multi-layer film also contained two internal and two external underskin layers of the same coPEN as the second optical layers for a total of 829 layers. In addition, two underskin layers were coextruded on both sides of the optical layer stack. These underskin layers were about 18 micrometers thick and comprised of PMMA (VO44 from Atofina, now Total Petrochemicals, Inc.).

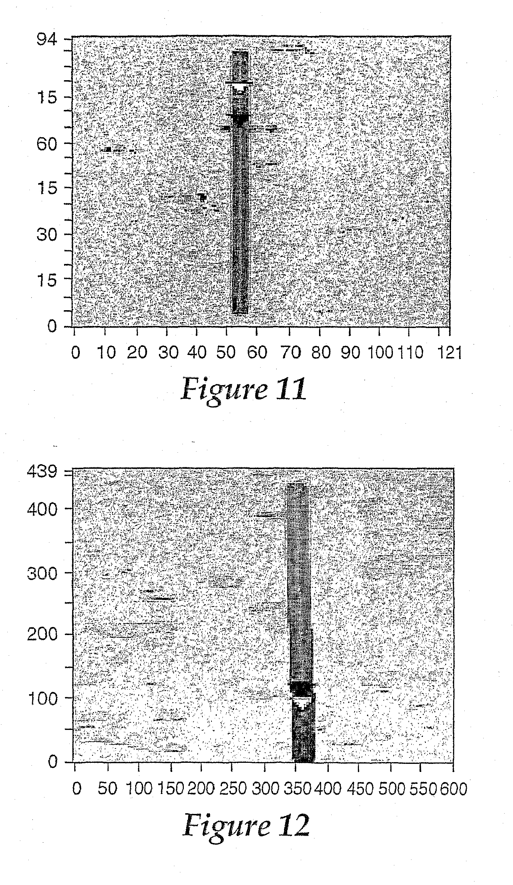

Rough strippable skin layers formed from an immiscible polymer blend of 96 wt% syndiotactic polypropylene (PP1571 from Atofina, now Total Petrochemicals, Inc.) and 4 wt% anti-static polymer (Pelestat 300 from Sanyo Chemical Industries) were formed over the PMMA blend structural layers. An extruded cast web of the above construction was then heated in a tentering oven with air at 150 °C for 45 seconds and then uniaxially oriented at a 6:1 draw ratio. The resulting reflective polarizer was transparent with the immiscible polymer blend strippable skin layers intact. When these rough strippable skin layers were removed, however, the film became hazy due to surface roughness imparted into the PMMA layers by the immiscible polymer blend. Haze of about 39.8% was measured with a BYK-Gardner haze meter. Surface analysis of this film is shown in Figure 11.

### Example 5

An optical body was produced by coextruding an immiscible blend of 80 wt% syndiotactic polypropylene (P1571 from Atofina, now Total Petrochemicals, Inc.) and 20 wt% high density polyethylene (Chevron HDPE 9640) as rough strippable skin layers on the outside of SAN (Tyril 880 from DOW) optical film. This rough strippable skin layer represented a combination of low crystallinity polypropylene along with highly crystalline polyethylene. The resulting 3-layer cast web was preheated for 50 seconds at 145 C and uniaxially oriented 6:1 at 100%/s draw rate. After removing the strippable immiscible blend skin layer, the core SAN layer was 6.8 mils thick. Haze was measured with a BYK-Gardner haze meter to be about 7.1%. Surface roughness was analyzed with a Wyko interferometer to have an Rq of 130nm and a Ra 120nm as shown in Figure 12.

### Example 6

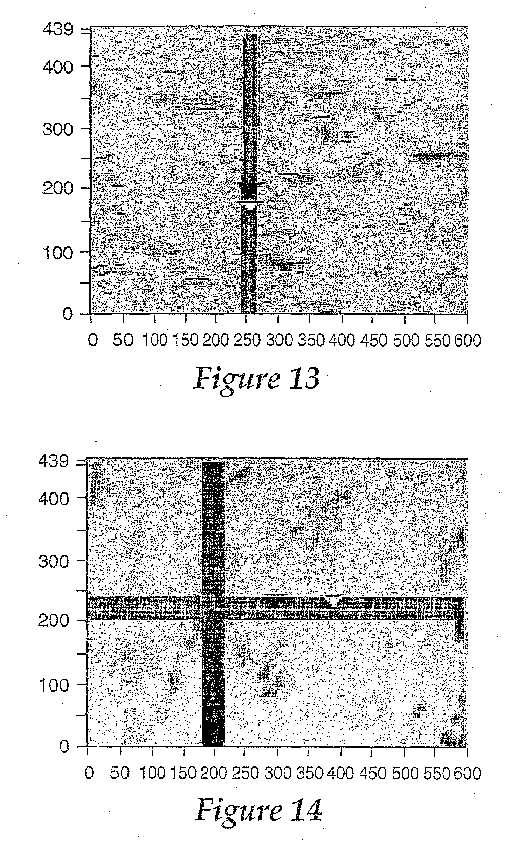

A multi-layer optical film was produced by coextruding an immiscible blend of 60 wt% syndiotactic polypropylene (P1571 from Atofina, now Total Petrochemicals, Inc.) and 40 wt% high density polyethylene (Chevron-Philips HDPE 9640) as rough strippable skin layers on the outside of SAN(Tyril 880 from Dow Chemical Company). This rough strippable skin layer represented a combination of low crystallinity polypropylene along with highly crystalline polyethylene. The resulting 3-layer cast web was preheated for 50 seconds at 145 °C and uniaxially oriented 6:1 at 100% per second draw rate. After removing the strippable immiscible blend skin layer, the core SAN layer was 5.9 mils thick. Haze was measured with a BYK-Gardner haze meter to be about 34.5%. Surface roughness was analyzed with a Wyko interferometer to have an Rq of 380nm and a Ra 340nm as shown in Figure 13.

### Example 7

An optical body was produced by coextruding an immiscible blend of 73 wt% syndiotactic polypropylene (P1571 from Atofina, now Total Petrochemicals, Inc.) and 27 wt% low density copolyethylene (Engage 8200) as rough strippable skin layers on the outside of SAN (Tyril 880 from DOW) optical film. This rough strippable skin layer represented a combination of low crystallinity polypropylene along with low crystallinity copolyethylene. The resulting 3-layer cast web was preheated for 50 seconds at 145 °C and uniaxially oriented 6:1 at 100% per second draw rate. After removing the strippable immiscible blend skin layer, the core SAN layer was 4.5 mils thick. Haze was measured with a BYK Gardner Haze meter to be about 4.5%. Surface roughness was analyzed with a Wyko interferometer to have an Rq of 80nm and a Ra 70nm as shown in Figure 14.

### Example 8

A random copolymer of propylene and ethylene (PP8650 from Atofina, now Total Petrochemicals, Inc.) was blended with a high density polyethylene (10462N from Dow Chemical Company) at 50/50 wt% and coextruded as rough strippable skins over a core-layer of polycarbonate(Lexan HF110 from GE Plastics Inc.) optical film to create an optical body shown in Fig. 1. Extrusion rates of the polycarbonate core layer was 12.5 lbs/hr and each of the polyolefin blend skin layers was 10 lbs/hr. The tri-layer optical body was cast at a width and speed that created a polycarbonate film of 2.5 mils thickness and rough skin layers of 2.0 mils thickness. The high density polyethylene was immiscible with the random propylene-ethylene copolymer and phase separated to produce protrusions on rough strippable skin layers, which were subsequently stripped away leaving a surface texture on the polycarbonate optical film. The peel force required to remove the immiscible blend rough strippable skins layers from the polycarbonate optical diffuser film was measured to be about 12 grams/inch with an I-mass tape peel force tester according to the method described above. A BYK-Gardner haze meter was used to measure a haze of about 94.2% in the polycarbonate optical diffuser film according to ASTM D1003.

### Example 9

A random copolymer of propylene and ethylene (PP7825 from Atofina, now Total Petrochemicals, Inc.) was blended with a high density polyethylene (HDPE 9640 from Chevron-Philips) at 45wt% and 5 wt% calcium carbonate CaCO3. This immiscible polymeric blend was coextruded as strippable skins over a core-layer of polycarbonate(Lexan HF110) optical film to create an optical body shown in Fig. 1. Extrusion rates of the polycarbonate core layer was 12.5 lbs/hr and each of the polyolefin blend skin layers was 10 lbs/hr. The tri-layer film was cast at a width and speed that created a polycarbonate film of 6.5 mils thickness and skin layers of 5.0 mils thickness. The high density polyethylene was immiscible with the random propylene-ethylene copolymer and phase separated to form protrusions on the rough strippable skin layers, which were subsequently stripped away leaving a surface texture on the polycarbonate optical film. The peel force required to remove the immiscible blend rough strippable skins layers from the polycarbonate optical diffuser film was measured to be about 14 grams/inch with an I-mass tape peel force tester according to the method described above. A BYK-Gardner haze meter was used to measure a haze of about 96.7% the polycarbonate optical diffuser film according to TM 1101.

The following Table 6 shows average peel force values for some of the exemplified and other possible embodiments of the present disclosure. CoPEN-tbia refers to coPEN copolymers including naphthalate dicarboxylate subunits and t-butyl-isophthalic acid (tbia).

**Table 6**

| **Continuous Phase Polymer** | **Disperse Phase Polymer** | **Disperse Phase Weight %** | **Optical Film Material** | **Average Peel Force (g/in)** |
|---|---|---|---|---|
| Finaplas 1571 | P-787 | 0.5 | PEN/coPEN SAN underskins | 3.5 |
| PP8650 | 10462N | 50 | polycarbonate | 12 |
| PP7825 | HDPE | 45 | polycarbonate | 14 |
| | CaCO3 | 5 | | |
| P1571 | HDPE | 20 | SAN | 2.6 |
| P1571 | Engage 8200 | 27 | SAN | 75.2 |
| P1571 | SAN | 20 | SAN | 15.8 |
| P1571 | SAN | 40 | SAN | 94.8 |
| P1571 | CoPEN-tbia | 20 | CoPEN-tbia | 153.3 |

### Example 10

Matte PET films were produced by coextruding a three-layer film that was comprised of one rough strippable skin layer, a PET core layer, and one smooth, strippable skin layer on the opposite side of the core layer from the rough, strippable skin layer. This way, only one surface of the PET core was embossed. The continuous phase of the rough, strippable skin was comprised of syndiotactic polypropylene (Finaplas 1571 from Atofina) and the dispersed phase was linear-low density polyethylene (Marflex 7104, from Chevron-Phillips Chemical Co.). The smooth skin was Finaplas 1571 with no disperse phase. The optical properties of the film were controlled by varying the loading of the disperse phase. These films were oriented using a batch film stretcher at the conditions listed in Table 7.

**Table 7: Stretch Conditions**

| | |
|---|---|
| Draw ratio | 3x3 (MD x TD) |
| Temperature | 100 C |
| Preheat time | 100 sec. |

The optical properties were measured using a BYK-Gardener haze meter and the surface roughness properties were measured using a Wyko interferometer. The optical properties and surface roughness properties of two films are shown in Table 8. We measured the aspect ratio of the depressions left in the PET surface from optical micrographs at 900X.

**Table 8: Optical and Surface Properties for Stretched Films**

| Additive | Haze (%) | Ra (nm) | Rq (nm) | Da (mrad) | Major Axis (µm) | Minor Axis (µm) | Aspect Ratio |
|---|---|---|---|---|---|---|---|
| 10% Marflex 7104 | 26.3 | 191 | 243 | 77 | 4.2 | 3.8 | 1.1 |
| 30% Marflex 7104 | 56.7 | 375 | 482 | 146 | 7.1 | 5.2 | 1.4 |
| 30% PE 2517 | 17.8 | 183 | 226 | 69 | 95.4 | 4.3 | 23.2 |

Da is the average slope for the depressions as measured by the Wyko interferometer.

### Example 11

Matte PET films were produced by coextruding a three-layer film that was comprised of one rough strippable skin layer, a PET core layer, and one smooth, strippable skin layer on the opposite side of the core layer from the rough, strippable skin layer. The rough strippable skin consisted of a blend of Finaplas 1571, available from Atofina Chemical Co., and Dowlex 2517, which is a linear-low-density polyethylene available from the Dow Chemical Company. The smooth skin consisted of Finaplas 1571 with no disperse phase. The loading of the dispersed phase in the rough, strippable skin was varied to control the optical and surface properties. The films were stretched at the same conditions as the previous example (Table 7) and the optical and physical properties are also shown in Table 8. The surface depressions were found to have average aspect ratios that were greater than 20, indicating that the surface structure was highly oriented in the machine direction. The droplets of the dispersed phase were oriented by shear of the die during extrusion and by the drawing of the film after exiting the die.

### Example 12

Matte PET films were produced by coextruding a two-layer film consisting of one rough, strippable skin layer and one PET layer and laminating this dual-layer film to commercially available, 5-mil PET film from DuPont. The rough, strippable skin layer was comprised of Finaplas 1571 from Atofina as the continuous phase and Marflex 7104 from Chevron-Phillips Chemical Co. as the dispersed phase. The PET resin was from 3M. Both the strippable skin and the PET layer were 1 mil thick. The two-layer film was laminated onto the 5 mil PET film from DuPont at 50 fpm, so that the extruded PET layer was in contact with the commercial PET film. Removal of the strippable skin left a rough PET surface. The haze of the film was controlled by changing the loading of the dispersed phase in the strippable skin. The results for several films are shown in Table 9.

**Table 9: Optical and Surface Properties for Stretched Films**

| Additive | Haze (%) | Ra (nm) | Rq (nm) | Da (mrad) | Major Axis (µm) | Minor Axis (µm) | Aspect Ratio |
|---|---|---|---|---|---|---|---|
| 15% Marflex 7104 | 30 | 238 | 302 | 65 | 4.7 | 4.0 | 1.2 |
| 20% Marflex 7104 | 40 | 386 | 495 | 80 | 6.7 | 5.2 | 1.3 |
| 10% Tyril 100 | 7 | 111 | 143 | 25 | 24.2 | 3.6 | 6.7 |
| 20% Tyril 100 | 13 | 181 | 237 | 34 | 27.1 | 4.6 | 5.9 |

### Example 13

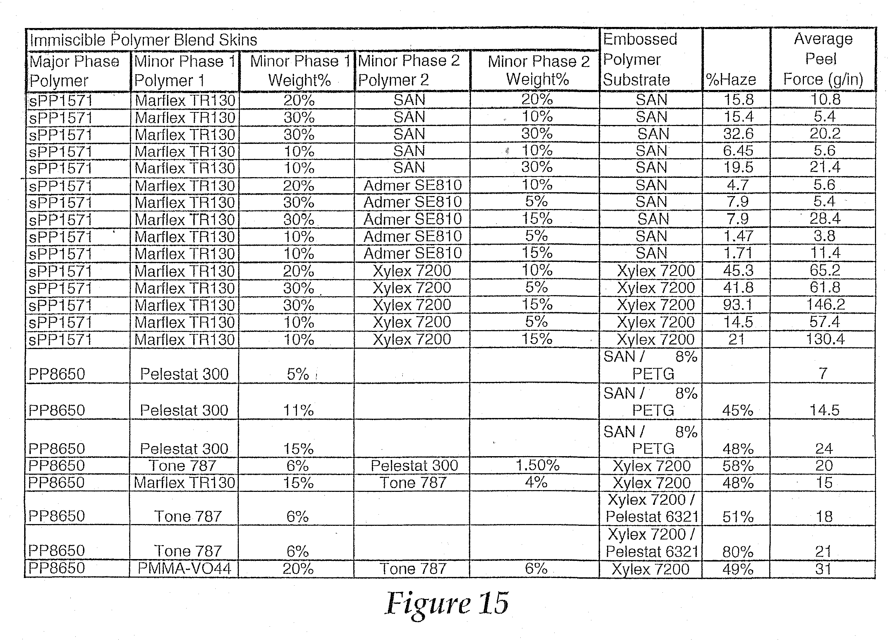

Matte PET films were created by coextruding a two-layer film comprising one rough, strippable skin layer and one PET layer and laminating this dual-layer film to commercial, biaxially oriented PET. The strippable skin layer was comprised of Tyril 100 from Dow Chemical Co. as the dispersed phase and Finaplas 1571 from Atofina as the continuous phase. The PET for the second extruded layer was from 3M Co. and the commercial PET film obtained from DuPont. The two-layer film laminated onto the commercial PET film at 50 fpm such that the extruded PET layer was in contact with the commercial PET film. Removal of the strippable skin left a rough PET surface. The haze of the film was controlled by changing the loading of the dispersed phase in the strippable skin. The results for two films with different Tyril 100 loadings are shown in Table 4. The droplets of Tyril 100 were elongated in the machine-direction during extrusion and embossed an asymmetric surface structure onto the extruded PET layer. The aspect ratios are nearly 6, with the structure being oriented in the machine direction. At high Tyril 100 loadings, the surface structure is dramatically oriented into long, hemispherical channels, as shown in Figure 15.

### 2. Three- or More-Polymer Rough Strippable Skin Layers

The following examples utilized a rough strippable skin comprising at least 3 polymers for the purposes of controlling strippable skin adhesion and providing a higher surface feature density. Utilizing at least 2 disperse phases in the rough strippable skins facilitates imparting a texture into a surface of an optical film including features (typically, depressions) of different sizes, which can help improve haze. In some exemplary embodiments, more than 2 disperse sub-phases can impart smaller concave surface features (depressions) between larger concave surface features (depressions), and, in some exemplary embodiments, smaller concave surface features (depressions) within larger concave surface features (depressions).

Materials used in the following examples are available from different manufacturers as described: PEN(.48 IV PEN from 3M Company), SAN(Tyril 880 from Dow Chemical), sPP(1571 available from Atofina, now Total Petrochemicals, Inc.), MDPE(Marflex TR130 available from Chevron-Philips), Admer(SE810 available from Mitsui Petrochemicals, Inc.), Xylex(Xylex 7200 available from GE Plastics Inc.), random propylene-ethylene copolymer(PP8650 available from Atofina, now Total Petrochemicals, Inc.), Pelestat 300(Pelestat 300 available from Tomen America), Pelestat 6321(Pelestat 6321 available from Tomen America), polycaprolactone(Tone 787), PMMA(VO44 available from Atofina, now Total Petrochemicals, Inc. Chemical), Polystyrene (Styron 685 available from Dow Chemical Company).

### Example 14

An optical body was produced by coextrusion of an optical film comprising PEN(polyethylene naphthalate), a pair of underskin layers comprising SAN(styrene acrylonitrile), and a pair of rough strippable skins layers comprising a blend of 60 wt% sPP(syndiotactic polypropylene), 20 wt% MDPE(medium density polyethylene), and 20 wt% SAN(styrene acrylonitrile). The core layer of the optical film was extruded using 1.5" single screw extruder operating at 555F at a rate of 10 lbs/hr. The underskin layers were extruded using a 1.25" single screw extruder operating at 500F at a rate of 10 lbs/hr. The pair of rough strippable skin layers were extrusion blended with a 25mm twin screw extruder operating at 480F and a screw speed of 150 rpm with the sPP at a feed rate of 6 lbs/hr, MDPE feed rate at 2 lbs/hr, and SAN feed rate at 2 lbs/hr. The core layer and the underskin layers were fed into a 3-layer feedblock attached to a rough strippable skin layer manifold, which fed into a film die, all operated at 530F. This multi-layer polymer melt was co-extruded onto a casting wheel operating at 90F and 5 fpm to produce a cast web approximately 30 mils in thickness.

The multi-layer cast web was then pre-heated at 290F for 50 seconds and oriented in a batch orientor at a draw rate of 100%/second to a draw ratio of 5:1. The pair of rough strippable skins was then peeled off and the force required to remove these rough strippable skins was measured by the 180 peel test method previously described to be about 10.8 grams/inch. A Gardner haze meter was used to measure the relative diffusion of light transmitted thru the film to have a haze value of about 15.8%.

### Example 15

An optical body was produced as described in Example 14 by coextrusion of an optical film comprising PEN(polyethylene naphthalate), a pair of underskin layers comprising SAN(styrene acrylonitrile), and a pair of rough strippable skins layers comprising a blend of 60 wt% sPP(syndiotactic polypropylene), 30 wt% MDPE(medium density polyethylene), and 10 wt% SAN(styrene acrylonitrile). A BYK-Gardner haze meter was used to measure the relative diffusion of light transmitted thru the film to have a haze value of about 15.4%.

### Example 16

An optical body was produced as described in Example 14 by coextrusion of an optical film comprising PEN(polyethylene naphthalate), an inner pair of structural skin layers comprising SAN(styrene acrylonitrile), and an outer pair of strippable skins layers comprising a blend of 40 wt% sPP(syndiotactic polypropylene), 30 wt% MDPE(medium density polyethylene), and 30 wt% SAN(styrene acrylonitrile). A BYK-Gardner haze meter was used to measure the relative diffusion of light transmitted thru the film to have a haze value of about 32.6%.

### Example 17

A optical body was produced as described in Example 14 by coextrusion of an optical film comprising PEN(polyethylene naphthalate), a pair of underskin layers comprising SAN(styrene acrylonitrile), and a pair of rough strippable skins layers comprising a blend of 80 wt% sPP(syndiotactic polypropylene), 10 wt% MDPE(medium density polyethylene), and 10 wt% SAN(styrene acrylonitrile). A BYK-Gardner haze meter was used to measure the relative diffusion of light transmitted thru the film to have a haze value of about 6.45%.

### Example 18

An optical body was produced as described in example 14 by coextrusion of an optical film comprising PEN(polyethylene naphthalate), a pair of underskin layers comprising SAN(styrene acrylonitrile), and a pair of rough strippable skins layers comprising a blend of 60 wt% sPP(syndiotactic polypropylene), 10 wt% MDPE(medium density polyethylene), and 30 wt% SAN(styrene acrylonitrile). A BYK-Gardner haze meter was used to measure the relative diffusion of light transmitted thru the film to have a haze value of about 19.5%.

### Example 19

An optical body was produced by coextrusion of an optical film comprising PEN(polyethylene naphthalate), a pair of underskin layers comprising SAN(styrene acrylonitrile), and a pair of rough strippable skins layers comprising a blend of 70 wt% sPP(syndiotactic polypropylene), 20 wt% MDPE(medium density polyethylene), and 10 wt% Admer SE810(modified polyethylene). The optical film core layer was extruded using 1.5" single screw extruder operating at 555F at a rate of 10 lbs/hr. The pair of underskin layers were extruded using a 1.25" single screw extruder operating at 500F at a rate of 10 lbs/hr. The pair of rough strippable skin layers were extrusion blended with a 25mm twin screw extruder operating at 480F and a screw speed of 200 rpm with the sPP at a feed rate of 7 lbs/hr, MDPE feed rate at 2 lbs/hr, and Admer feed rate at 1 lbs/hr. The core layer and underskin layers were fed into a 3-layer feedblock attached to an additional outer skin layer manifold which fed into a film die all operated at 530F. This multi-layer polymer melt was co-extruded onto a casting wheel operating at 90F and 5 fpm to produce a cast web approximately 30 mils in thickness.

The multi-layer cast web was then pre-heated at 290F for 50 seconds and oriented in a batch orientor at a draw rate of 100%/second to a draw ratio of 5:1. The pair of rough strippable skins was then peeled off and the force required to remove these rough strippable skins was measured by the 180 peel test method previously described to be about 5.6 grams/inch. A Gardner haze meter was used to measure the relative diffusion of light transmitted thru the film to have a haze value of about 4.7%.

### Example 20

An optical body was produced as described in Example 19 by coextrusion of an optical film comprising PEN(polyethylene naphthalate), a pair of underskin layers comprising SAN(styrene acrylonitrile), and a pair of rough strippable skins layers comprising a blend of 65 wt% sPP(syndiotactic polypropylene), 30 wt% MDPE(medium density polyethylene), and 5 wt% Admer SE810(modified polyethylene). A BYK-Gardner haze meter was used to measure the relative diffusion of light transmitted thru the film to have a haze value of about 7.9%.

### Example 21

An optical body was produced as explained in Example 19 by coextrusion of an optical film comprising PEN(polyethylene naphthalate), a pair of underskin layers comprising SAN(styrene acrylonitrile), and a pair of rough strippable skins layers comprising a blend of 55 wt% sPP(syndiotactic polypropylene), 30 wt% MDPE(medium density polyethylene), and 15 wt% Admer SE810(modified polyethylene). A BYK-Gardner haze meter was used to measure the relative diffusion of light transmitted thru the film to have a haze value of about 7.9%.

### Example 22

An optical body was produced as explained in Example 19 by coextrusion of an optical film comprising PEN(polyethylene naphthalate), a pair of underskin layers comprising SAN(styrene acrylonitrile), and a pair of rough strippable skins layers comprising a blend of 85 wt% sPP(syndiotactic polypropylene), 10 wt% MDPE(medium density polyethylene), and 5 wt% Admer SE810(modified polyethylene). A BYK-Gardner haze meter was used to measure the relative diffusion of light transmitted thru the film to have a haze value of about 1.47%.

### Example 23

An optical body was produced as explained in Example 19 by coextrusion with a of a core layer comprising PEN(polyethylene naphthalate), an inner pair of structural skin layers comprising SAN(styrene acrylonitrile), and an outer pair of strippable skins layers comprising a blend of 75 wt% sPP(syndiotactic polypropylene), 10 wt% MDPE(medium density polyethylene), and 15 wt% Admer SE810(modified polyethylene). A BYK-Gardner haze meter was used to measure the relative diffusion of light transmitted thru the film to have a haze value of about 1.7%.

### Example 24

An optical body was produced by coextrusion of an optical film comprising PEN(polyethylene naphthalate), a pair of underskin layers comprising SAN(styrene acrylonitrile), and a pair of rough strippable skins layers comprising a blend of 70 wt% sPP(syndiotactic polypropylene), 20 wt% MDPE(medium density polyethylene), and 10 wt% Xylex 7200(polycarbonate/copolyester blend). The optical film core layer was extruded using 1.5" single screw extruder operating at 555F at a rate of 10 lbs/hr. The pair of underskin layers were extruded using a 1.25" single screw extruder operating at 500F at a rate of 10 lbs/hr. The pair of rough strippable skin layers were extrusion blended with a 25mm twin screw extruder operating at 480F and a screw speed of 200 rpm with the sPP at a feed rate of 7 lbs/hr, MDPE feed rate at 2 lbs/hr, and Xylex feed rate at 1 lbs/hr. The core layer and underskin layers were fed into a 3-layer feedblock attached to a rough strippable skin layer manifold which fed into a film die all operated at 530F. This multi-layer polymer melt was co-extruded onto a casting wheel operating at 90F and 5 fpm to produce a cast web approximately 30 mils in thickness.

The multi-layer cast web was then pre-heated at 290F for 50 seconds and oriented in a batch orientor at a draw rate of 100%/second to a draw ratio of 5:1. The pair of rough strippable skins was then peeled off and the force required to remove these rough strippable skins was measured by the 180 peel test method previously described to be about 65.2 grams/inch. A Gardner haze meter was used to measure the relative diffusion of light transmitted thru the film to have a haze value of about 45.3%.

### Example 25

An optical body was produced as explained in Example 24 by coextrusion of an optical film comprising PEN(polyethylene naphthalate), a pair of underskin layers comprising SAN(styrene acrylonitrile), and a pair of rough strippable skins layers comprising a blend of 65 wt% sPP(syndiotactic polypropylene), 30 wt% MDPE(medium density polyethylene), and 5 wt% Xylex 7200(polycarbonate/copolyester blend). A BYK-Gardner haze meter was used to measure the relative diffusion of light transmitted thru the film to have a haze value of about 41.8%.

### Example 26

An optical body was produced as explained in Example 24 by coextrusion of an optical film comprising PEN(polyethylene naphthalate), a pair of underskin layers comprising SAN(styrene acrylonitrile), and a pair of rough strippable skins layers comprising a blend of 55 wt% sPP(syndiotactic polypropylene), 30 wt% MDPE(medium density polyethylene), and 15 wt% Xylex 7200(polycarbonate/copolyester blend). A BYK-Gardner haze meter was used to measure the relative diffusion of light transmitted thru the film to have a haze value of about 93.1%.

### Example 27

An optical body was produced as explained in Example 24 by coextrusion of an optical film comprising PEN(polyethylene naphthalate), a pair of underskin layers comprising SAN(styrene acrylonitrile), and a pair of rough strippable skins layers comprising a blend of 85 wt% sPP(syndiotactic polypropylene), 10 wt% MDPE(medium density polyethylene), and 5 wt% Xylex 7200(polycarbonate/copolyester blend). A BYK-Gardner haze meter was used to measure the relative diffusion of light transmitted thru the film to have a haze value of about 14.5%.

### Example 28

An optical body was produced ass explained in Example 24 by coextrusion of an optical film comprising PEN(polyethylene naphthalate), a pair of underskin layers comprising SAN(styrene acrylonitrile), and a pair of rough strippable skins layers comprising a blend of 75 wt% sPP(syndiotactic polypropylene), 10 wt% MDPE(medium density polyethylene), and 15 wt% Xylex 7200(polycarbonate/copolyester blend). A BYK-Gardner haze meter was used to measure the relative diffusion of light transmitted thru the film to have a haze value of about 21%.

### Example 29

An optical body including a multilayer polarizer film was constructed with first optical layers created from a polyethylene naphthalate and second optical layers created from co(polyethylene naphthalate), underskin layers created from a cycloaliphatic polyester/polycarbonate blend (Xylex 7200), and rough strippable skin layers created from an immiscible blend of PP8650, Tone 787, and Pelestat 300.

The copolyethylene-hexamethylene naphthalate polymer (CoPEN5050HH) used to form the first optical layers was synthesized in a batch reactor with the following raw material charge: dimethyl 2,6-naphthalenedicarboxylate (80.9 kg), dimethyl terephthalate (64.1 kg), 1,6-hexane diol (15.45 kg), ethylene glycol (75.4 kg), trimethylol propane (2 kg), cobalt (II) acetate (25 g), zinc acetate (40g), and antimony (III) acetate (60g). The mixture was heated to a temperature of 254 degrees C at a pressure of two atmospheres (2x10⁵ N/m²) and the mixture was allowed to react while removing the methanol reaction product. After completing the reaction and removing the methanol (approximately 42.4 kg) the reaction vessel was charged with triethyl phosphonoacetate (55 g) and the pressure was reduced to one torr (263 N/m²) while heating to 290degrees C. The condensation by-product, ethylene glycol, was continuously removed until a polymer with intrinsic viscosity 0.55 dl/g as measured in a 60/40 weight percent mixture of phenol and o-dichlorobenzene is produced. The CoPEN5050HH polymer produced by this method had a glass transition temperature (Tg) of 85 degrees C as measured by differential scanning calorimetry at a temperature ramp rate of 20 degrees C per minute.

The above described PEN and CoPEN5050HH were coextruded through a multilayer melt manifold to create a multilayer optical film with 275 alternating first and second optical layers. This 275 layer multi-layer stack was divided into 3 parts and stacked to form 825 layers. The PEN layers were the first optical layers and the CoPEN5050HH layers were the second optical layers. In addition to the first and second optical layers, a set of non-optical layers, also comprised of CoPEN5050HH were coextruded as PBL(protective boundary layers) on either side of the optical layer stacks. Two sets of underskin layers were also coextruded on the outer side of the PBL non-optical layers through additional melt ports. Xylex 7200 was used to form the underskin layers. The rough strippable skin layers were made from PP8650(polypropylene-ethylene copolymer) blended with 6 wt% Tone P-787(polycaprolactone) and 1.5 wt% Pelestat 300 (modified polyethylene available from Tomen/Sanyo). The construction was, therefore, in order of layers: polypropylene mixture rough strippable skin layer, Xylex 7200 underskin layer, 825 alternating layers of optical layers one and two, Xylex 7200 underskin layer, and a further polypropylene mixture rough strippable skin layer.

The multilayer extruded film was cast onto a chill roll at 5 meters per minute (15 feet per minute) and heated in an oven at 150°C (302°F) for 30 seconds, and then uniaxially oriented at a 5.5:1 draw ratio. A reflective polarizer film of approximately 125 microns (5 mils) thickness was produced after removal of the strippable polypropylene mixture skins. Peel force required to remove these strippable skins was measured with the 180 degree peel test to be 20 grams/inch. This multilayer film was measured to have a haze level of 58% as measured with a BYK-Gardner haze meter.

### Example 30

An optical body including a multilayer reflective polarizer film was constructed with first optical layers created from a polyethylene naphthalate and second optical layers created from co(polyethylene naphthalate), underskin layers created from a cycloaliphatic polyester/polycarbonate blend (Xylex 7200), and rough strippable skin layers created from an immiscible blend of PP8650, Tone 787, and Marflex TR130. The copolyethylene-hexamethylene naphthalate polymer (CoPEN5050HH) used to form the first optical layers was synthesized in a batch reactor with the following raw material charge: dimethyl 2,6-naphthalenedicarboxylate (80.9 kg), dimethyl terephthalate (64.1 kg), 1,6-hexane diol (15.45 kg), ethylene glycol (75.4 kg), trimethylol propane (2 kg), cobalt (II) acetate (25 g), zinc acetate (40g), and antimony (III) acetate (60g). The mixture was heated to a temperature of 254 degrees C at a pressure of two atmospheres (2x10⁵ N/m²) and the mixture was allowed to react while removing the methanol reaction product. After completing the reaction and removing the methanol (approximately 42.4 kg) the reaction vessel was charged with triethyl phosphonoacetate (55 g) and the pressure was reduced to one torr (263 N/m²) while heating to 290degrees C. The condensation by-product, ethylene glycol, was continuously removed until a polymer with intrinsic viscosity 0.55 dl/g as measured in a 60/40 weight percent mixture of phenol and o-dichlorobenzene is produced. The CoPEN5050HH polymer produced by this method had a glass transition temperature (Tg) of 85 degrees C as measured by differential scanning calorimetry at a temperature ramp rate of 20 degrees C per minute. The above described PEN and CoPEN5050HH were coextruded through a multilayer melt manifold to create a multilayer optical film with 275 alternating first and second optical layers. This 275 layer multi-layer stack was divided into 3 parts and stacked to form 825 layers. The PEN layers were the first optical layers and the CoPEN5050HH layers were the second optical layers. In addition to the first and second optical layers, a set of non-optical layers, also comprised of CoPEN5050HH were coextruded as PBL(protective boundary layers) on either side of the optical layer stacks. Two sets of skin layers were also coextruded on the outer side of the PBL non-optical layers through additional melt ports. Xylex 7200 was used to form the internal set of skin layers. The external skin layers were made from PP8650(random propylene-ethylene copolymer) blended with 4 wt% Tone P-787(polycaprolactone) and 15 wt% Marflex TR130 (medium density polyethylene). The construction was, therefore, in order of layers: polypropylene mixture outer skin layer, Xylex 7200 inner skin layer, 825 alternating layers of optical layers one and two, Xylex 7200 inner skin layer, and a further polypropylene mixture outer skin layer.

The multilayer extruded film was cast onto a chill roll at 5 meters per minute (15 feet per minute) and heated in an oven at 150°C (302°F) for 30 seconds, and then uniaxially oriented at a 5.5:1 draw ratio. A reflective polarizer film of approximately 125 microns (5 mils) thickness was produced after removal of the rough strippable polypropylene mixture skin layers. Peel force required to remove these rough strippable skins was measured with the 180 degree peel test to be about 15 grams/inch. This multilayer film was measured to have a haze level of about 47.9% as measured with a BYK-Gardner haze meter.

### Example 32

An optical body including a multilayer reflective polarizer film was constructed with first optical layers created from a polyethylene naphthalate and second optical layers created from co(polyethylene naphthalate), underskin layers created from a cycloaliphatic polyester/polycarbonate blend (Xylex 7200), and external rough strippable skin layers created from an immiscible blend of PP8650, Tone P-787, and PMMA-VO44.

The copolyethylene-hexamethylene naphthalate polymer (CoPEN5050HH) used to form the first optical layers was synthesized in a batch reactor with the following raw material charge: dimethyl 2,6-naphthalenedicarboxylate (80.9 kg), dimethyl terephthalate (64.1 kg), 1,6-hexane diol (15.45 kg), ethylene glycol (75.4 kg), trimethylol propane (2 kg), cobalt (II) acetate (25 g), zinc acetate (40g), and antimony (III) acetate (60g). The mixture was heated to a temperature of 254 degrees C at a pressure of two atmospheres (2x10⁵ N/m²) and the mixture was allowed to react while removing the methanol reaction product. After completing the reaction and removing the methanol (approximately 42.4 kg) the reaction vessel was charged with triethyl phosphonoacetate (55 g) and the pressure was reduced to one torr (263 N/m²) while heating to 290 degrees C. The condensation by-product, ethylene glycol, was continuously removed until a polymer with intrinsic viscosity 0.55 dl/g as measured in a 60/40 weight percent mixture of phenol and o-dichlorobenzene is produced. The CoPEN5050HH polymer produced by this method had a glass transition temperature (Tg) of 85 degrees C as measured by differential scanning calorimetry at a temperature ramp rate of 20 degrees C per minute.

The above described PEN and CoPEN5050HH were coextruded through a multilayer melt manifold to create a multilayer optical film with 275 alternating first and second optical layers. This 275 layer multi-layer stack was divided into 3 parts and stacked to form 825 layers. The PEN layers were the first optical layers and the CoPEN5050HH layers were the second optical layers. In addition to the first and second optical layers, a set of non-optical layers, also comprised of CoPEN5050HH were coextruded as PBL(protective boundary layers) on either side of the optical layer stacks. Two sets of underskin layers were also coextruded on the outer side of the PBL non-optical layers through additional melt ports. Xylex 7200 was used to form the set of underskin layers. The rough strippable skin layers were made from PP8650(polypropylene-ethylene copolymer) blended with 6 wt% Tone P-787(polycaprolactone) and 20 wt% PMMA(VO44). The construction was, therefore, in order of layers: polypropylene mixture rough strippable skin layer, Xylex 7200 underskin layer, 825 alternating layers of optical layers one and two, Xylex 7200 underskin layer, and a further polypropylene mixture rough strippable skin layer.

The multilayer extruded film was cast onto a chill roll at 5 meters per minute (15 feet per minute) and heated in an oven at 150°C (302°F) for 30 seconds, and then uniaxially oriented at a 5.5:1 draw ratio. A reflective polarizer film of approximately 125 microns (5 mils) thickness was produced after removal of the rough strippable polypropylene mixture skins. Peel force required to remove these rough strippable skins was measured with the 180 degree peel test to be about 31 grams/inch. This multilayer film was measured to have a haze level of about 49% as measured with a BYK-Gardner haze meter.

### Example 33

An optical body including a multilayer reflective polarizer film was constructed with first optical layers created from a polyethylene naphthalate and second optical layers created from co(polyethylene naphthalate), underskin layers created from a cycloaliphatic polyester/polycarbonate (Xylex 7200) blended with polystyrene(Styron 685) and Pelestat 6321, and rough strippable skin layers created from an immiscible blend of PP8650, PP6671, and Tone P-787.

The copolyethylene-hexamethylene naphthalate polymer (CoPEN5050HH) used to form the first optical layers was synthesized in a batch reactor with the following raw material charge: dimethyl 2,6-naphthalenedicarboxylate (80.9 kg), dimethyl terephthalate (64.1 kg), 1,6-hexane diol (15.45 kg), ethylene glycol (75.4 kg), trimethylol propane (2 kg), cobalt (II) acetate (25 g), zinc acetate (40g), and antimony (III) acetate (60g). The mixture was heated to a temperature of 254 degrees C at a pressure of two atmospheres (2x10⁵ N/m²) and the mixture was allowed to react while removing the methanol reaction product. After completing the reaction and removing the methanol (approximately 42.4 kg) the reaction vessel was charged with triethyl phosphonoacetate (55 g) and the pressure was reduced to one torr (263 N/m²) while heating to 290degrees C. The condensation by-product, ethylene glycol, was continuously removed until a polymer with intrinsic viscosity 0.55 dl/g as measured in a 60/40 weight percent mixture of phenol and o-dichlorobenzene is produced. The CoPEN5050HH polymer produced by this method had a glass transition temperature (Tg) of 85 degrees C as measured by differential scanning calorimetry at a temperature ramp rate of 20 degrees C per minute.

The above described PEN and CoPEN5050HH were coextruded through a multilayer melt manifold to create a multilayer optical film with 275 alternating first and second optical layers. This 275 layer multi-layer stack was divided into 3 parts and stacked to form 825 layers. The PEN layers were the first optical layers and the CoPEN5050HH layers were the second optical layers. In addition to the first and second optical layers, a set of non-optical layers, also comprised of CoPEN5050HH were coextruded as protective boundary layers on either side of the optical layer stack. Underskin layers were also coextruded on the outer side of the underskin layers through additional melt ports. Xylex 7200 blended with 15 wt% Styron 685 and 4 wt% Pelestat 6321 was used to form the underskin layers. The rough strippable skin layers were made from PP8650(polypropylene-ethylene copolymer) blended with 16 wt% Tone 787(polycaprolactone) and 41 wt% PP6671(polypropylene-ethylene copolymer) and 2 wt% Pelestat 300. The construction was, therefore, in order of layers: polypropylene mixture rough strippable skin layer, Xylex/Styron/Pelestat blend underskin layer, 825 alternating layers of optical layers one and two, Xylex /Styron/Pelestat blend underskin layer, and a further polypropylene mixture rough strippable skin layer.

The multilayer extruded film was cast onto a chill roll at 5 meters per minute (15 feet per minute) and heated in an oven at 150°C (302°F) for 30 seconds, and then uniaxially oriented at a 5.5:1 draw ratio. A reflective polarizer film of approximately 125 microns (5 mils) thickness was produced after removal of the rough strippable polypropylene mixture skins. Peel force required to remove these rough strippable skins was measured with the 180 degree peel test to be about 31 grams/inch. This multilayer film was measured to have a haze level of about 51 % as measured with a BYK-Gardner haze meter.

Figure 15 is a table summarizing % haze and average peel force for exemplary embodiments described in Examples 14-33 and additional exemplary embodiments. Table 10 contains various surface characterizations of the exemplary embodiments described in Examples 14-35 and 27-28.

| Example | | Bearing Ratio Rvk | Bearing Ratio Rpk | Positive Volume | Negative Volume | Volume | SArea Index | Stylus X Rp | Stylus X Rpk | Stylus X Rv | Stylus X Rvk |
|---|---|---|---|---|---|---|---|---|---|---|---|
| 14 | Average | 239.58 | 559.68 | 5348 | 6788 | 143113 | 1.031 | 1402.43 | 525.09 | -427.42 | 158.81 |
| | Std. Dev | 31.68 | 183.41 | 1351 | 1076 | 72815 | 0.015 | 465.10 | 192.06 | 114.41 | 31.67 |
| 15 | Average | 339.00 | 482.75 | 29081 | 31299 | 427432 | 1.025 | 1676.98 | 349.08 | -470.41 | 149.59 |
| | Std. Dev | 10.36 | 74.81 | 2844 | 3080 | 214770 | 0.002 | 227.28 | 68.62 | 44.49 | 22.30 |
| 16 | Average | 530.53 | 1150.04 | 10519 | 17560 | 251793 | 1.114 | 2871.76 | 1062.36 | -1025.78 | 337.08 |
| | Std. Dev | 61.44 | 309.00 | 4664 | 6838 | 131908 | 0.054 | 792.89 | 335.20 | 482.79 | 122.04 |
| 17 | Average | 132.84 | 283.26 | 11900 | 7261 | 265566 | 1.014 | 1120.87 | 255.19 | -322.52 | 102.53 |
| | Std. Dev | 10.36 | 165.23 | 2919 | 1237 | 270682 | 0.009 | 554.53 | 148.56 | 92.63 | 45.23 |
| 18 | Average | 212.89 | 992.45 | 6005 | 3224 | 220444 | 1.121 | 2735.12 | 1057.33 | -723.50 | 202.73 |
| | Std. Dev | 17.33 | 258.35 | 1007 | 71 | 160602 | 0.033 | 465.95 | 276.32 | 174.89 | 82.31 |
| 19 | Average | 250.43 | 195.11 | 20984 | 26821 | 118265 | 1.002 | 299.55 | 86.81 | -357.77 | 132.71 |
| | Std. Dev | 35.68 | 34.25 | 2150 | 3668 | 13952 | 0.000 | 40.90 | 9.33 | 36.33 | 13.65 |
| 20 | Average | 330.73 | 285.60 | 24222 | 32052 | 301322 | 1.004 | 303.92 | 74.12 | -195.02 | 70.44 |
| | Std. Dev | 21.26 | 66.03 | 2917 | 3052 | 362906 | 0.002 | 89.07 | 20.04 | 27.41 | 9.28 |
| 21 | Average | 360.86 | 375.56 | 29085 | 41853 | 284944 | 1.008 | 542.25 | 123.19 | -251.18 | 81.44 |
| | Std. Dev | 46.90 | 88.80 | 6516 | 6592 | 228376 | 0.004 | 244.09 | 53.49 | 61.76 | 27.60 |
| 22 | Average | 155.57 | 154.35 | 7879 | 5822 | 23331 | 1.013 | 314.88 | 83.27 | -178.85 | 51.43 |
| | Std. Dev | 113.19 | 25.51 | 1319 | 1043 | 6534 | 0.020 | 99.31 | 32.64 | 77.07 | 11.60 |
| 23 | Average | 132.47 | 97.08 | 9408 | 8680 | 37228 | 1.002 | 195.22 | 43.29 | -123.22 | 40.94 |
| | Std. Dev | 53.71 | 28.60 | 891 | 1046 | 4344 | 0.001 | 102.60 | 23.20 | 21.08 | 8.64 |
| 24 | Average | 1970.44 | 1118.73 | 70098 | 133729 | 967813 | 1.101 | 1780.98 | 448.56 | -881.34 | 291.28 |
| | Std. Dev | 691.10 | 338.54 | 14179 | 16999 | 744353 | 0.039 | 865.51 | 206.18 | 297.28 | 99.05 |
| 25 | Average | 1881.65 | 1324.61 | 23934 | 29268 | 132425 | 1.418 | 2455.68 | 746.10 | -1909.35 | 572.62 |
| | Std. Dev | 786.75 | 619.47 | 11123 | 7468 | 43684 | 0.228 | 912.87 | 387.01 | 1456.76 | 299.03 |
| 27 | Average | 320.02 | 173.88 | 19117 | 21653 | 85654 | 1.014 | 302.04 | 73.02 | -454.20 | 145.76 |
| | Std. Dev | 34.70 | 30.25 | 2218 | 2211 | 11875 | 0.004 | 62.54 | 10.21 | 8.27 | 2.69 |
| 28 | Average | 483.64 | 306.74 | 27353 | 37288 | 148554 | 1.030 | 596.28 | 128.61 | -550.73 | 199.42 |
| | Std. Dev | 24.57 | 52.72 | 673 | 2309 | 7101 | 0.003 | 97.65 | 14.51 | 11.79 | 6.44 |

| | | | | | | | | | | | |
|---|---|---|---|---|---|---|---|---|---|---|---|
| Table 10 | | | | | | | | | | | |

### 3. Prophetic Examples

The invention can be further understood by reference to the following prophetic examples:

### Prophetic Example 1

A low melting and low crystallinity polypropylene or polyethylene copolymer loaded with silica particles can be co-extruded as outer rough strippable skin layers with a multi-layer optical film, such as DBEF, made with PEN higher refractive index layers, coPEN lower refractive index layers, and coPEN under-skin layers, to create an optical body shown in Fig. 1. The low melting and low crystallinity polypropylene or polyethylene copolymer and silica rough strippable skin layers can be subsequently stripped away leaving a surface texture on the coPEN under-skin layers of the optical film.

### Prophetic Example 2

An optical body similar to that described in Prophetic Example 1 can be constructed, with the exception that styrene acrylonitrile (SAN) under-skin layers replace the coPEN under-skin layers. The rough strippable skin layers, thus, can be subsequently stripped away leaving a surface texture on the SAN under-skin layers of the optical film.

### Prophetic Example 3

An optical body similar to that described in Prophetic Example 1 can be constructed, with the exception that talc would replace the silica particles blended into the low melting and low crystallinity polypropylene or polyethylene copolymer.

### Prophetic Example 4

An optical body similar to that described in Prophetic Example 1 can be constructed, with the exception that the multi-layer optical film is made from PET and coPMMA with PET under-skin layers. The rough strippable skin layers, thus, can be subsequently stripped away leaving a surface texture on the PET under-skin layers of the multi-layer optical film.

### Prophetic Example 5

An optical body similar to that described in Prophetic Example 4 can be constructed, with the exception that the multi-layer optical film is made from PET and coPMMA with coPMMA under-skin layers. The rough strippable skin layers, thus, can be subsequently stripped away leaving a surface texture on the coPMMA under-skin layers of the multi-layer optical film.

### Prophetic Example 6

An optical body similar to that described in Prophetic Example 1 can be constructed, with the exception that the multi-layer optical film is made from PEN and PMMA with PEN under-skin layers. The rough strippable skin layers can be subsequently stripped away leaving a surface texture on the PEN under-skin layers of the multi-layer optical film.

### Prophetic Example 7

An optical body similar to that described in Prophetic Example 6 can be constructed, with the exception that the multi-layer optical film is made from PEN and PMMA with PMMA under-skin layers. The rough strippable skin layers can be subsequently stripped away leaving a surface texture on the PMMA under-skin layers of the multi-layer optical film.

### Prophetic Example 8

A single-layer optical film can be co-extruded with one or more rough strippable skin layers to leave a surface texture on one or more of its surfaces, as illustrated in Figs. 1 and 2. The textured single-layer optical film can then be laminated to other structures, such as a multi-layer reflector or polarizer, to provide enhanced optical and/or physical properties.

### Prophetic Example 9

Optical bodies can be constructed as illustrated in Figs. 1 or 2 with an additional smooth outer skin layer, as illustrated in Fig. 3. The smooth outer skin layer can include a material that is also included into the rough strippable skin layer or layers and can be removed with the rough strippable skin layer or separately therefrom. The additional smooth outer skin layer would contain a negligible amount of rough particles, and, thus, could decrease extruder die lip build-up and flow patterns that could otherwise be caused by such particles.

Although the present invention has been described with reference to the exemplary embodiments specifically described herein, those of skill in the art will recognize that changes may be made in form and detail without departing from the spirit and scope of the present disclosure.

## Claims

1. An optical body, comprising:
an optical film having a first surface, a major axis and a minor axis, said first surface comprising a plurality of asymmetric depressions, each asymmetric depression having a major dimension substantially collinear with the major axis and a minor direction substantially collinear with the minor axis.

2. The optical body of claim 1, wherein the optical film is selected from the group consisting of: a multilayer polarizer, a multilayer reflector, an optical film having a continuous and a disperse phase, a layer comprising styrene acrylonitrile, a layer comprising polycarbonate, a layer comprising PET, a layer comprising a cycloaliphatic polyester/polycarbonate and any number or combination thereof.

3. The optical body of claim 1, wherein the optical film comprises at least one underskin layer.

4. The optical body of claim 1, wherein the optical film comprises at least one underskin layer and the underskin layer comprises a first material and a second material substantially immiscible in the first material, said second material being polymeric or inorganic.

5. The optical body of claim 1, wherein the optical body comprises at least two rough strippable skin layers operatively connected to each of two opposing sides of the optical film.

6. The optical body of claim 1, wherein the rough strippable skin layer further comprises a coloring agent.

7. The optical body of claim 1, said optical body being substantially transparent.

8. The optical body of claim 1, wherein the optical body comprises a birefringent material.

9. The optical body of claim 1, further comprising at least one smooth outer skin layer disposed over the at least one rough strippable skin layer.
